(19) Europäisches Patentamt
European Patent Office
Office européen des brevets

(11) **EP 3 807 336 B1**

(12) **EUROPÄISCHE PATENTSCHRIFT**

(45) Veröffentlichungstag und Bekanntmachung des Hinweises auf die Patenterteilung:
**17.01.2024 Patentblatt 2024/03**

(21) Anmeldenummer: **19730753.1**

(22) Anmeldetag: **12.06.2019**

(51) Internationale Patentklassifikation (IPC):
**C08G 18/80** *(2006.01)*     **C08K 3/36** *(2006.01)*
**C08G 18/28** *(2006.01)*

(52) Gemeinsame Patentklassifikation (CPC):
(C-Sets verfügbar)
**B01D 63/023; C08G 18/58; C08G 18/80;**
**C08G 18/809; C08K 9/04;** C08G 2340/00;
C08K 3/36; C08K 2003/2227; C08K 2003/2241;
C08K 2003/2244                                      (Forts.)

(86) Internationale Anmeldenummer:
**PCT/EP2019/065325**

(87) Internationale Veröffentlichungsnummer:
**WO 2019/238742 (19.12.2019 Gazette 2019/51)**

(54) **TEMPERATURBESTÄNDIGES VERGUSSMATERIAL FÜR HOHLFASERMEMBRANEN**

TEMPERATURE-RESISTANT POTTING MATERIAL FOR HOLLOW FIBER MEMBRANES

MATIÈRE D'ENROBAGE RÉSISTANTE AUX TEMPÉRATURES POUR DES MEMBRANES À FIBRES CREUSES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.06.2018 DE 102018209444**

(43) Veröffentlichungstag der Anmeldung:
**21.04.2021 Patentblatt 2021/16**

(73) Patentinhaber: **Fresenius Medical Care Deutschland GmbH**
**61352 Bad Homburg (DE)**

(72) Erfinder:
• **FAUST, Matthias**
**66123 Saarbrücken (DE)**
• **WILHELM, Manuel**
**66386 St. Ingbert (DE)**

(74) Vertreter: **Ricker, Mathias**
**Wallinger Ricker Schlotter Tostmann**
**Patent- und Rechtsanwälte Partnerschaft mbB**
**Zweibrückenstraße 5-7**
**80331 München (DE)**

(56) Entgegenhaltungen:
**EP-A1- 2 236 532     US-A- 4 359 359**

• **JUN YATABE ET AL: "PREPARATION OF HYDROPHOBIC SILICA WITH ISOCYANATES", JOURNAL OF THE CERAMIC SOCIETY OF JAPAN, INTERNATIONAL EDITION, FUJI TECHNOLOGY PRESS, TOKYO, JP, Bd. 102, Nr. 6, 1. Juni 1994 (1994-06-01), Seiten 595-598, XP000474335, ISSN: 0912-9200**
• **BAOLI OU ET AL: "Functionalized TiOnanoparticle containing isocyanate groups", MATERIALS CHEMISTRY AND PHYSICS, ELSEVIER SA, SWITZERLAND, TAIWAN, REPUBLIC OF CHINA, Bd. 135, Nr. 2, 13. Juni 2012 (2012-06-13) , Seiten 1104-1107, XP028414868, ISSN: 0254-0584, DOI: 10.1016/J.MATCHEMPHYS.2012.06.027 [gefunden am 2012-06-26]**

(52) Gemeinsame Patentklassifikation (CPC): (Forts.)

C-Sets
**C08K 9/04, C08L 75/04**

**Beschreibung**

Die Erfindung betrifft ein Verfahren zum Vergießen einer Vielzahl von Hohlfasermembranen mit einer Vergussmasse zur Herstellung einer aus einem Polyurethanharz bestehenden Vergusszone. Die Erfindung betrifft weiterhin einen Hohlfasermembranfilter aufweisend eine Vielzahl von Hohlfasermembranen, die in wenigstens einer Vergusszone in einem Polyurethanharz vergossen sind. Darüber hinaus betrifft die Erfindung ein isocyanatgruppenhaltiges Addukt zur Herstellung eines Polyurethanharzes. Weiterhin betrifft die Erfindung die Verwendung des isocyanatgruppenhaltigen Addukts für Verfahren zum Vergießen von Hohlfasermembranen.

**HINTERGRUND DER ERFINDUNG**

Hohlfasermembranfilter werden in Filtrationsvorgängen in der Wasseraufbereitung und im medizinischen Bereich z.B. in der extrakorporalen Blutbehandlung von nierenkranken Patienten verwendet. In der Herstellung von Hohlfasermembranfiltern wird eine Vielzahl von Hohlfasermembranen, die in der Regel zu Hohlfasermembranbündeln zusammengefasst sind, in ein Gehäuse eines Filtermoduls eingebracht und an den Enden der Hohlfasermembranen innerhalb des Gehäuses mit einer Vergussmasse vergossen. Die Herstellung derartiger Hohlfasermembranfilter ist im Stand der Technik bekannt.

Üblicherweise wird für das Vergießen der Enden der Hohlfasermembranen eine bei Raumtemperatur fließfähige Vergussmasse verwendet. In der Regel bestehen derartige Vergussmassen aus einer Zusammensetzung von mehreren Komponenten, insbesondere präpolymeren Komponenten. Die Komponenten sind dabei so ausgelegt, dass sie nach Vermischen und unter chemischer Reaktion innerhalb einer bestimmten Zeit zu einem Harz aushärten. Die Zeit, in der die Vergussmasse fließfähig und verarbeitbar bleibt, wird als Topfzeit bezeichnet. Die Vergussmassen zum Vergießen von Hohlfasermembranen werden demnach kurz vor dem Vergießen aus den einzelnen Komponenten zusammengemischt. Die Vergussmasse liegt dabei zunächst nach Vermischen der Komponenten in einem fließfähigen Zustand vor und kann so für das Vergießen von Hohlfasermembranen verwendet werden. Für das Vergießen von Hohlfasermembranen ist es insbesondere wichtig, dass die fließfähige Vergussmasse sich in dem Hohlfasermembranbündel verteilen kann und die einzelnen Hohlfasermembranen in der Vergusszone von der Vergussmasse eingebettet werden.

Die Vergussmassen müssen für das Vergießen von Hohlfasermembranbündeln speziell ausgelegt sein. Die in der Wasseraufbereitung und in der Medizin verwendeten Hohlfasermembranfilter weisen Hohlfasermembranbündel auf, die aus 15.000 Hohlfasermembranen oder mehr bestehen können. Eine einzelne Hohlfasermembran hat dabei einen üblichen Durchmesser von 150 bis 350 μm. Die Packungsdichten der Hohlfasermembranbündel können 60% und darüber betragen. Geeignete Vergussmassen müssen daher ausreichend fließfähig sein um jede einzelne Hohlfasermembran in der Vergusszone zu umschließen. Darüber hinaus müssen die Vergussmassen aber auch so aushärten können, dass das ausgehärtete Harz ausreichende mechanische Festigkeit aufweist um mechanischen Spannungen, die z.B. durch thermische Beanspruchung hervorgerufen werden, zu kompensieren.

Üblicherweise werden für das Vergießen von Hohlfasermembranbündeln Vergussmassen verwendet, die zu Polyurethanharzen aushärten. Polyurethanharze werden insbesondere aus medizinischer Sicht, z.B. in der Verwendung für Vergussmassen in Dialysefiltern, als unbedenklich eingestuft. Weiterhin eignen sich Hohlfasermembranfilter, deren Hohlfasermembranen mit Polyurethanharzen vergossen sind, auch dafür kurzfristig die thermischen Bedingungen einer Hitzesterilisation zu überdauern.

Übliche Vergussmassen, die zu den Polyurethanharzen verarbeitet werden, werden im Wesentlichen aus zwei Komponenten hergestellt. Eine erste Komponente beinhaltet organische Polyolverbindungen. Polyolhaltige Verbindungen können z.B. mehrwertige Alkohole, Zuckerverbindungen oder polymere Verbindungen mit endständigen Hydroxygruppen sein. Als polymere Polyole werden z.B. PolyetherPolyole oder Polyester Polyole verwendet. Als weitere Komponente wird eine Diisocyanatkomponente verwendet.

Die Polyolkomponente und die Isocyanatkomponente werden zu einer Vergussmasse vermischt und bleiben innerhalb der Topfzeit zunächst flüssig und verarbeitbar. Derartige Vergussmassen werden üblicherweise für das Vergießen von Hohlfasermembranbündeln in der Herstellung von Hohlfasermembranfiltern verwendet. Die Herstellung derartiger Hohlfasermembranfilter ist im Stand der Technik bekannt. Die EP 2 024 067 A1 beschreibt ein Verfahren zum Vergießen von Hohlfasermembranen in einem Gehäuseteil eines Hohlfasermembranfilters. Bei dem Verfahren wird die fließfähige Vergussmasse in einem Rotationsverfahren in den Endbereich der Hohlfasermembranen eingebracht. Durch die Rotationskräfte verteilt sich die fließfähige Vergussmasse im Endbereich der Hohlfasermembranen und die Hohlfasermembranen werden in der Vergussmasse eingebettet. Anschließend wird die Vergussmasse zum Polyurethanharz ausgehärtet, so dass die Hohlfasermembranen über die Endseitigen Vergusszonen im Gehäuseteil fixiert sind.

Es hat sich jedoch gezeigt, dass die Verwendung von Vergussmassen, wie sie zur Herstellung von Dialysefiltern und Filtern für die Wasseraufbereitung verwendet werden, nicht generell für alle Filtrationsanwendungen zufriedenstellend sind. Insbesondere besteht in der industriellen Verarbeitung von wässrigen Flüssigkeiten oder in der häuslichen Anwendung die Anforderung von langandauernden Filtrationen bei erhöhten Temperaturen. Es besteht bei Filtrationsanwendungen bei höheren Temperaturen das Problem, dass die Härte, der zu Polyurethanharzen ausgehärteten Vergussmassen herabgesetzt wird und das Polyurethanharz Hydrolysevorgängen unterliegt. Die Haftung der Vergussmasse zu den Gehäuseteilen und zu den Hohlfasermembranen wird dadurch negativ beeinflusst und Undichtigkeiten im Hohlfasermembranfilter sind als Folge zu erwarten.

Die EP 1 992 399 A1 beschreibt ein Vergussmaterial mit einem Füllstoff in einem Hohlfasermembranfilter mit verbesserter Kriechhöhe des Vergussmaterials. Der Anteil des Füllstoffs im Vergussmaterial liegt dabei unterhalb einer Konzentration von ca. 3 %, mit der ein zu starker Anstieg der Viskosität des Vergussmaterials verbunden ist. Als Füllstoff wird Siliziumdioxid beschrieben. Durch die verbesserte Kriechhöhe wird die Dichtigkeit des Vergusses verbessert.

Die EP 2 644 662 A1 beschreibt ein Hohlfasermembranmodul mit ausreichender Dauerhaftigkeit gegenüber einem Dampf-Sterilisationsprozess und gleichbleibender stabiler Filtrationseigenschaften. Das Hohlfasermembranmodul weist ein Polyurethanharz als Vergussmaterial auf, dessen Zugfestigkeit nach Kontakt mit gesättigtem Dampf bei 121°C für 24 Stunden weniger als 25% abnimmt. Die Zugabe eines Füllstoffes dient dazu Wärme während des Vergießens abzuführen und vermeidet Materialschrumpfung und Rissbildung. Als Füllmaterial werden Siliziumdioxid, Calciumkarbonat und Glasfasern genannt.

Die US 4,359,359 beschreibt die Herstellung eines Einbettungsmaterials aus Polyurethan zur Verbesserung des Härtegrades und der Reaktionszeit des Einbettungsmaterials. Das Einbettungsmaterial wird durch Umsetzung eines aromatischen Diisocyanats, eines Castor- Öls und einem Trimethylolpropan erhalten. Zur Verbesserung der rheologischen Eigenschaften kann dem Einbettungsmaterial ein thixotropes Additiv auf Basis von Kieselsäure zugegeben werden.

Die US 2014/0217023 beschreibt ein Filtersystem mit einer Vielzahl von Hohlfasermembranen, die in einem wärmehärtenden Vergussmaterial eingebettet sind. Das Vergussmaterial kann aus einem Urethan Harz bestehen, das Füllstoffe z.B. Siliziumdioxid enthält, um die Zugfestigkeit zu verbessern und Materialschrumpfung zu vermeiden.

Die Publikation Jun Yatabe et al.: "Preparation of hydrophobic Silica with Isocyanates"; Journal of the ceramic society of Japan, International Edition, Fuji Technology Press, Tokyo, Bd. 102, Nr. 6, 1. Juni 1994 (1994-06-01), Seiten 595-598, beschreibt ein isocyanatgruppenhaltiges Addukt, erhalten durch Umsetzen wenigstens einer Isocyanatkomponente, enthaltend zumindest eine Diisocyanatverbindung (TDI), und hydroxygruppenhaltigen anorganischen Partikeln ($SiO_2$), wobei wenigstens ein Teil der Hydroxygruppen der hydroxygruppenhaltigen anorganischen Partikel mit wenigstens einem Teil der Isocyanatgruppen der Isocyanatkomponente zu Urethanbindung umgesetzt sind, und wobei in dem erhaltenen Addukt freie Isocyanatgruppen vorhanden sind.

EP 2 236 532 A1 beschreibt isocyanatmodifiziertes kolloidales Silica.

Die Publikation Baoli ou et al.: "Functionalized TiO nanoparticle containing isocyanate groups"; Materials chemistry and physics; Elsevier SA, Bd. 135, Nr. 2, 13. Juni 2012 (2012-06-13), Seiten 1104-1107, beschreibt isocyanatmodifizierte $TiO_2$ Nanopartikel.

Der zugrundeliegende Stand der Technik offenbart keine Vergussmassen, die im flüssigen Zustand die Eigenschaften einer guten Verarbeitbarkeit hinsichtlich des Vergießens von Hohlfasermembran aufweisen und im ausgehärteten Zustand eine erhöhte Thermostabilität zeigen. Die bekannten zu Polyurethanharzen ausgehärteten Vergussmassen sind daher bezüglich der Thermostabilität verbesserungswürdig.

## AUFGABE DER ERFINDUNG

In einem ersten Aspekt der Erfindung bestand daher die Aufgabe, ein Verfahren zum Vergießen von Hohlfasermembranen in einer zu einem Polyurethanharz aushärtenden Vergussmasse bereitzustellen, so dass eine Vergusszone mit erhöhter thermischer Stabilität erhalten wird.

In einem weiteren Aspekt der Erfindung bestand die Aufgabe in der Bereitstellung eines Hohlfasermembranfilters mit einer Vielzahl von Hohlfasermembranen, die in einer Vergusszone in einem Polyurethanharz eingebettet sind, die sich durch eine verbesserte Temperaturbeständigkeit auszeichnet.

In einem weiteren Aspekt der Erfindung bestand die Aufgabe darin, eine isocyanatgruppenhaltiges Addukt bereitzustellen, das nach Umsetzen mit einer Polyolkomponente und Aushärten zu einem Polyurethanharz eine erhöhte Temperaturbeständigkeit aufweist.

In einem vierten Aspekt bestand die Aufgabe darin, eine Verwendung eines isocyanathaltigen Adduktes in einem Verfahren zum Vergießen einer Vielzahl von Hohlfasermembranen in der Herstellung von Filtermodulen anzugeben, wobei die Module eine erhöhte Temperaturbeständigkeit aufweisen.

## ZUSAMMENFASSUNG DER ERFINDUNG

In einem ersten Aspekt der Erfindung wird die Aufgabe durch ein Verfahren zum Vergießen von Hohlfasermembranen nach Anspruch 1 gelöst. Die Ansprüche 2 bis 8 stellen bevorzugte Ausführungsformen dar.

In einem zweiten Aspekt der Erfindung wird die Aufgabe durch ein Hohlfasermembranfilter nach Anspruch 9 gelöst. Die Ansprüche 10 bis 14 stellen bevorzugte Ausführungsformen dar.

In einem vierten Aspekt der Erfindung wird die Aufgabe durch die Verwendung eines isocyanatgruppenhaltigen Addukts nach wenigstens einem der Ansprüche 16 bis 19 in einem Verfahren zum Vergießen einer Vielzahl von Hohlfasermembranen in der Herstellung von Filtermodulen für die Nano- Ultra- oder Mikrofiltration gelöst.

## KURZBESCHREIBUNG DER FIGUREN

Fig. 1 zeigt eine Graphik zur Ermittlung des Glasübergangspunktes mittels DSC. Die Grafik zeigt die Bestimmung eines Onsets des temperaturabhängigen Kurvenverlaufs. Der Onset wird durch Anlegen von Tangenten an die entsprechenden Kurvenabschnitte ermittelt.

Fig. 2 zeigt einen stirnseitigen Ausschnitts eines Vergussbereichs, in dem Hohlfasermembranen in einem Vergussmaterial (in diesem Fall ein Polyurethanharz) eines Hohlfasermembrafilters (nicht gezeigt) vergossen sind. Es ist in der Abbildung zu sehen, dass das Polyurethanharz die einzelnen Membranen dicht umschließt.

## DETAILLIERTE BESCHREIBUNG DER ERFINDUNG

In einem ersten Aspekt betrifft die Erfindung ein Verfahren zum Vergießen von Hohlfasermembranen aufweisend die Schritte:

(i) Bereitstellen einer Vielzahl von Hohlfasermembranen,

(ii) Umsetzen einer Isocyanatkomponente, enthaltend zumindest eine Diisocyanatverbindung, mit hydroxygruppenhaltigen anorganischen Partikeln unter Ausbildung einer Zusammensetzung enthaltend ein isocyanatgruppenhaltiges Addukt, wobei die Isocyanatgruppen der Isocyanatkomponente gegenüber den Hydroxygruppen der hydroxygruppenhaltigen anorganischen Partikel im stöchiometrischen Überschuss vorgelegt werden, und wobei wenigstens ein Teil der Hydroxygruppen der hydroxygruppenhaltigen anorganischen Partikel mit wenigstens einem Teil der Isocyanatgruppen der Isocyanatkomponente zu Urethanbindungen umgesetzt sind,

(iii) Vermischen der erhaltenen Zusammensetzung enthaltend das isocyanatgruppenhaltige Addukt, mit einer Polyolkomponente, enthaltend zumindest eine Diolverbindung, zu einer Vergussmasse,

(iv) Vergießen der Hohlfasermembranen mit der Vergussmasse in zumindest einer Vergusszone,

(v) Aushärten der Vergussmasse in der Vergusszone zu einem Polyurethanharz.

Gemäß dem erfindungsgemäßen Verfahren ist es möglich, Hohlfasermembranen in einem Polyurethanharz einzubetten, welches eine höhere thermische Stabilität aufweist. Es wurde dabei festgestellt, dass die Bildung des isocyanathaltigen Addukts aus hydroxygruppenhaltigen anorganischen Partikeln und der Isocyanatkomponente die verbesserte thermische Stabilität der zum Polyurethanharz ausgehärteten Vergussmasse bewirkt. Als Maß für die thermische Stabilität ist die Glasübergangstemperatur zu betrachten. Eine höhere Glasübergangstemperatur des Polyurethanharz steht demnach auch für eine höhere Festigkeit des Materials bei höheren Temperaturen. Insbesondere können durch das erfindungsgemäße Verfahren Vergusszonen aus Polyurethanharzen hergestellt werden, deren Glasübergangstemperaturen 3°C, insbesondere 5°C Grad, weiter insbesondere 8°C höher liegen als die Glasübergangstemperaturen von Polyurethanharzen, die nicht nach dem erfindungsgemäßen Verfahren, jedoch unter Verwendung der gleichen Polyol- und Isocyanatverbindung, hergestellt wurden. Die Beständigkeit des Polyurethanharzes in der Vergusszone zwischen Hohlfasermembranen und Teilen des Gehäuses des Hohlfasermembranfilters ist dadurch bei höheren Temperaturen verbessert, so dass sich insgesamt eine höhere Sicherheit der Dichtigkeit des Polyurethanharzes ergibt.

Bei dem erfindungsgemäßen Verfahren wird zunächst von einer Vielzahl von Hohlfasermembranen ausgegangen, wobei die Hohlfasermembranen für das Vergießen bereitgestellt werden. Bei der Vielzahl der Hohlfasermembranen handelt es sich vorzugsweise um ein Hohlfasermembranbündel. Die Bündelung von Hohlfasermembranen zu Hohlfasermembranbündeln ist im Stand der Technik und in der Herstellung von Hohlfasermembranfiltermodulen bekannt. Vorzugsweise wird für das erfindungsgemäße Verfahren ein Hohlfasermembranbündel in einem Gehäuseteil, insbesondere in einem Gehäuseteil eines Hohlfasermembranfiltermoduls bereitgestellt. Unter einer *"Vielzahl"* von Hohlfasermembranen ist eine Anzahl von Hohlfasermembranen zu verstehen, die in Herstellprozessen von Hohlfasermembranfiltermodulen üblicherweise verwendet werden. Diesbezüglich sind Hohlfasermembranfiltermodule mit einer Anzahl von 100 bis 55.000 Hohlfasermembranen bekannt. Daneben werden aber auch für Entwicklungszwecke Versuchsmodule mit einer geringeren Anzahl von Hohlfasermembranen mit bis zu 10 und darunter vergossen.

Weiterhin wird in dem erfindungsgemäßen Verfahren zunächst von einer Isocyanatkomponente ausgegangen. Unter einer *"Isocyanatkomponente"* wird im Sinne der vorliegenden Anmeldung eine Zusammensetzung von di-, tri-, und mehrfach funktionellen organischen Isocyanat Verbindungen verstanden. Entscheidend ist, dass die Isocyanatkomponente Diisocyanatverbindungen enthält, die im Sinne einer Polyaddition mit einer Polyolkomponente unter Ausbildung von Urethanbindung zu einem Polymer reagieren können. Im untergeordneten Maße können auch Monoisocyanatverbindungen und mehrfach funktionelle Isocyanate in der Isocyanatkomponente vorliegen. Im Sinne der vorliegenden Anmeldung ist es auch möglich, für die Isocyanatkomponente auf Zusammensetzungen von isocyanatgruppenfunktionalisierten Präpolymeren zurückzugreifen. Derartige Präpolymere können durch Polymerisation von Diisocyanatmonomeren gewonnen werden. Als Beispiel für ein polymeres Isocyanat ist PMDI (polymeres Diphenylmethandiisocyanat) zu nennen. Es ist weiter möglich, dass die nach dem erfindungsgemäßen Verfahren verwendete Isocyanatkomponente eine Mischung von isocyanatgruppenhaltigen Präpolymeren und monomeren isocyanatgruppenhaltigen Verbindungen aufweist. Als Beispiele für geeignete monomere Isocyanate sind HDI (Hexamethylendiisocyanat, TDI (Toluylendiidocyanat), MDI (Methylendi(phenylisocyanat), NDI (Naphthylendiisocyanat), IPDI (Isophorondiisocyanat) und H12MDI (4,4'-Diisocyanatodicyclohexylmethan) zu nennen. Die Isocyanatkomponente kann weitere Additive aufweisen, die die Umsetzung der Isocyanatkomponente mit der Polyolkomponente unterstützen, oder die der Alterungsbeständigkeit des Polyurethaharzes dienen.

Vorzugsweise liegt die Isocyanatkomponente in einem bei Raumtemperatur flüssigen Zustand vor. Insbesondere ist es vorteilhaft, dass die Isocyanatkomponente Anteile an flüssigen Diisocyanatverbindungen aufweist. Die Isocyanatkomponente kann auch Diisocyanatverbindungen enthalten, die für sich genommen fest, wachsartig oder viskos sind. In diesem Fall ist es vorteilhaft, dass derartige Diisocyanatverbindungen in einem Anteil flüssiger Diisocyanatverbindungen gelöst vorliegen. Insbesondere ist für das erfindungsgemäße Verfahren eine flüssige Isocyanatkomponente vorgesehen. Die gemäß dem erfindungsgemäßen Verfahren eingesetzte flüssige Isocyanatkomponete weist vorteilhafterweise eine Viskosität von 50 bis 1000 mPa*s, bevorzugt 500 bis 1000 mPa*s auf, gemessen bei 25°C mit einem Viskosimeter VT550 der Fa. Haake, Deutschland bei der Stufe r.3 (30 U/min.) mit einem Drehkörper "MV1 (MV-DIN)" der Fa. Haake (Schergeschwindigkeit 38,7/s). Eine niedrige Viskosität der Isocyanatkomponente ermöglicht eine gute Verarbeitung der Vergussmasse während der Topfzeit, insbesondere eine vollständige Einbettung der Hohlfasermembranen in der Vergussmasse.

Weiterhin werden für das erfindungsgemäße Verfahren hydroxygruppenhaltige anorganische Partikel verwendet. Die hydroxygruppenhaltigen anorganischen Partikel können in Pulverform oder zunächst als Granulat in kompakter oder in poröser Form vorliegen. Die hydroxygruppenhaltigen Partikel können durch Zerkleinerungsvorgänge auf die gewünschte Partikelgröße gebracht werden. Bevorzugt ist jedoch die Gewinnung der anorganischen Partikel durch Abscheidung aus einem Sol-Gel Prozess oder durch Herstellung in einem pyrogenen Prozess, da so Partikel mit besonders geringer Partikelgröße darstellbar sind. Die Hydroxygruppen der anorganischen Partikel können bereits im Herstellprozess der anorganischen Partikel gebildet werden. Alternativ können die Hyroxygruppen auch durch Funktionalisierung der Oberfläche der anorganischen Partikel erhalten werden. Erfahrungsgemäß bilden sich Hydroxygruppen auch bei pyrogenen Produkten nach Lagerung bei Umgebungsbedingungen nach kurzer Zeit aus.

Die Umsetzung der Isocyanatkomponente mit den hydroxygruppenhaltigen anorganischen Partikeln zu einer Zusammensetzung enthaltend das isocyanatgruppenhaltige Addukt geschieht vorzugsweise in einem Behältnis und unter Rühren. Dabei werden die hydroxygruppenhaltigen Partikel zu einem flüssigen Ansatz der Isocyanatkomponente gegeben und gerührt gegebenenfalls auch unter zusätzlicher Ultraschalleinwirkung. Unter "Umsetzen" wird in Sinne der vorliegenden Anmeldung eine Reaktion unter Ausbildung einer chemischen Bindung verstanden. Als "chemische Bindung" werden im Sinne der vorliegenden Anmeldung kovalente Bindungen und koordinative Bindungen verstanden. Die Anzahl der Isocyanatgruppen in der vorgelegten Isocyanatkomponente liegt dabei gegenüber den durch die hydroxygruppenhaltigen anorganischen Partikel eingebrachten Hydroxybindung in einem stöchiometrischen Überschuss vor. Die Umsetzung erfolgt dabei so, dass nach der Umsetzung freie Isocyanatgruppen in dem isocyanatgruppenhaltigen Addukt vorliegen. Unter "freien Isocyanatgruppen" werden reaktive Isocyanatgruppen verstanden, die nicht an die Hydroxygruppen der hydroxygruppenhaltigen Partikel gebunden sind und somit geeignet sind, mit den Hyydroxygruppen der Polyolkomponente zu reagieren. Unter dem "isocyanatgruppenhaltigen Addukt" wird im Sinne der vorliegenden Anmeldung eine Verbindung verstanden die aus der Isocyanatkomponente und den hydroxygruppenhaltigen anorganischen Partikeln durch chemische Reaktion entsteht.

Die bei der Umsetzung der Isocyanatkomponente mit den hydroxygruppenhaltigen anorganischen Partikeln erhaltene Zusammensetzung ist ein Gemisch verschiedener Verbindungen. Dabei können anorganische Partikel unter Umsetzung der Hydroxygruppen mit einer oder mehreren Isocyanatverbindungen der Isocyanatkomponente durch chemische Reaktion und Ausbildung von Urethanbindungen verbunden sein. Daneben können auch Isocyanatverbindungen in der Zusammensetzung vorliegen, die nicht durch chemische Reaktion mit anorganischen Partikeln verbunden sind. Vorteilhaft ist, wenn bei der Umsetzung möglichst alle reaktiven Hydroxygruppen der hydroxygruppenhaltigen anorganischen Partikel durch chemische Reaktion umgesetzt werden. Der Fortgang der Umsetzung der Hydroxygruppen kann diesbezüglich fortlaufend durch Analysemethoden überwacht werden und daraus ein Endpunkt der Umsetzung der Isocyanatkomponente mit den hydroxygruppenhaltigen anorganischen Partikeln bestimmt werden. Erfindungsgemäß erfolgt die Umsetzung zum isocyanatgruppenhaltigen Addukt innerhalb von 0,5 h oder 1h oder 5h oder 1 Tag oder 2 Tagen bei Raumtemperatur. Dabei ist wichtig, dass die Umsetzung der Zusammensetzung, das isocyanatgruppenhaltige Addukt enthaltend, mit der Isocyanatkomponente nicht zu einer makroskopischen Vernetzung führt, da ansonsten das isocyanatgrupenhaltige Addukt nicht ausreichend mit der Polyolkomponente vermischt werden kann. Daraus folgend wird auch der weitere Schritt des Aushärtens und das vollständige Vergießen der Hohlfasermembranen verhindert. Unter einer *"makroskopischen Vernetzung"* wird im Sinne der vorliegenden Anmeldung die sichtbare Bildung von polymeren Niederschlägen oder Gelen verstanden.

Für das Vermischen der Polyolkomponente mit der Zusammensetzung, die das isocyanatgruppenhaltige Addukt enthält, können niedrigmolekulare und hochmolekulare Polyolverbindungen verwendet werden. Geeignete niedrigmolekulare Polyole sind z.B. Ethylenglycol, Diethylenglycol, Propylenglycol, Dipropylen glycol, 1,3-butandiol oder 1,4-Butandiol. Geeignete hochmolekulare Polyole sind Polyetherpolyole, wie z.B. Polyethylenglycol, Polypropylenglycol, Polytetramethylenglycolether, daneben auch Polyesterpolyole, Polycaprolactonpolyole, lineare oder verzweigte Castoröle. Daneben sind als Polyolkomponente auch Mischungen der zuvor genannten Polyole einsetzbar. Entscheidend ist, dass die Polyolkomponente eine Diolverbindung aufweist, die befähigt ist, mit einer Diisocyanatverbindung unter Polyaddition zu einem Polyurethan zu reagieren. Mono-, Triund Polyhydroxyverbindungen können in der Polyolkomponente in untergeordnetem Maße vorhanden sein. Mono-, tri- und Polyhydroxyverbindungen werden verwendet, um die Kettenlänge und den Verzweigungsgrad der durch Aushärten der Vergussmassen erhaltenen Polyurethanharze einzustellen.

Bevorzugt liegt die Polyolkomponente bei Raumtemperatur im flüssigen Zustand vor. Insbesondere ist es vorteilhaft, dass die Polyolkomponente Anteile an flüssigen Diolverbindungen aufweist. Die Polyolkomponente kann auch Diolverbindungen enthalten, die für sich genommen fest, wachsartig oder viskos sind. In diesem Fall ist es vorteilhaft, dass derartige Diolverbindungen in einem Anteil flüssiger Diolverbindungen gelöst vorliegen. Die gemäß dem erfindungsgemäßen Verfahren eingesetzte Polyolkomponente weist eine Viskosität von 200-5500 mPa*s, bevorzugt 300-5000 mPa*s auf, gemessen bei 25°C mit einem Viskosimeter VT550 der Fa. Haake, Deutschland bei der Stufe r.3 (30 U/min.) mit einem Drehkörper "MV1 (MV-DIN)" der Fa. Haake (Schergeschwindigkeit 38,7/s). Eine niedrige Viskosität der Polyolkomponente ermöglicht eine gute Verarbeitung der Vergussmasse während der Topfzeit, insbesondere wird eine vollständige Einbettung der Hohlfasermembranen in der Vergussmasse erreicht.

Das Vermischen der Zusammensetzung, enthaltend das isocyanatgruppenhaltige Addukt, mit der Polyolkomponente erfolgt bevorzugt in einem Behältnis unter Rühren und bildet die Vergussmasse. Mit dem Vermischen beginnt der Aushärteprozess der Vergussmasse zum Polyurethanharz. Dabei sinkt die Viskosität der noch flüssigen Vergussmasse zunächst, da die Temperatur durch die beginnende Reaktion ansteigt. Im Verlauf der weiteren Reaktion steigt die Viskosität jedoch trotz weiter steigender Temperatur stark an bis zur vollständigen Aushärtung. Das Durchschreiten des Viskositätsminimums gewährleistet eine gute Verarbeitbarkeit und ermöglicht dabei auch eine vollständige Einbettung der Hohlfasermembranen durch das Vergießen trotz des Vorhandenseins des isocyanathaltigen Adduktes in der Vergussmasse. Dabei ist die Packungsdichte der Hohlfasermembranen zu berücksichtigen, das heißt, dass gegebenenfalls eine besonders hohe Packungsdichte eine geringere Viskosität der Vergussmasse erforderlich macht, was in diesem Fall auch die anwendbare Konzentration des Adduktes in der Vergussmasse begrenzen kann. Das Vergießen der Hohlfasermembranen erfolgt vorzugsweise in einem Tauchvergussverfahren oder in einem Rotationsverfahren. Beim *"Tauchvergussverfahren"* wird ein Abschnitt der bereitgestellten Hohlfasermembranen in die flüssige Vergussmasse eingetaucht und anschließend ausgehärtet. Die flüssige Vergussmasse verteilt sich dabei durch Kapillarkräfte zwischen den Hohlfasermembranen. Beim *"Rotationsverfahren"* wird das bereitgestellte Hohlfasermembranbündel rotiert. Während der Rotation wird die Vergussmasse zu einem Abschnitt der Hohlfasermembranen, die die Vergusszone bildet, zugeleitet. Die flüssige Vergussmasse verteilt sich durch Kapillarkräfte und Fliehkräfte zwischen den Hohlfasermembranen. Bezüglich des Rotationsverfahrens wird auf die europäische Anmeldung EP 2 024 067 A1 der Anmelderin verwiesen.

Da die Vergussmasse direkt nach Vermischen durch Polyaddition zu einem Polyurethanharz selbsthärtend ist, erfolgt das Härten der Vergussmasse bei Raumtemperatur typischerweise innerhalb von 1 h. Alternativ kann durch Temperaturen von bis zu 80°C oder bis zu 70°C oder bis zu 60°C, insbesondere bis 45°C das Aushärten unterstützt werden und zu verkürzten Aushärtezeiten von weniger als 20 Minuten führen.

In einer Ausführung des ersten Aspekts ist das erfindungsgemäße Verfahren dadurch gekennzeichnet, dass die hydroxygruppenhaltigen anorganischen Partikel eine gewichtsmittlere Korngröße von 200 nm oder weniger, bevorzugt von 150 nm oder weniger, weiter bevorzugt 100 nm oder weniger weiter bevorzugt 50 nm oder weniger und mindestens 1 nm oder mehr, oder 2 nm oder mehr, oder 5 nm oder mehr aufweisen. Die gewichtsmittlere Korngröße kann nach bekannten Methoden bestimmt werden, beispielsweise mit Laserbeugung. Sie kann aber auch mittels Transmissionselektronenmikroskopie ermittelt werden. Dazu wird eine Probe der Partikel im Transmissionselektronenmikroskop vermessen, wobei für eine Anzahl von Partikeln (ca. 1000) der Durchmesser und das Aspektverhältnis bei länglichen Partikeln bestimmt wird. Daraus kann eine Partikelgrößenverteilung ermittelt werden. Diese Methode ist insbesondere bei kleinen Partikelgrößen unter 50 nm zu bevorzugen.

Hydroxygruppenhaltige anorganische Partikel mit geringer gewichtsmittlerer Korngröße sind bevorzugt, da sie einen höheren Anteil an Hydroxygruppen aufweisen können und somit eine höhere Anzahl an Urethangruppen beim daraus resultierenden isocyanatgruppenhaltigen Addukt ermöglichen. Hydroxygruppenhaltige Partikel mit zu geringer Korngröße sind jedoch aufgrund auftretender Agglomeratbildung in der Handhabung schwierig, so dass eine möglichst vollständige Absättigung der Hydroxygruppen nicht mehr ausreichend sichergestellt werden kann, so dass gegebenenfalls ein etwas geringerer Anstieg des Glasübergangspunktes erreicht werden kann.

In einer weiteren Ausführung des ersten Aspekts der Erfindung ist das Verfahren zum Vergießen der Hohlfasermembranen dadurch gekennzeichnet, dass der Anteil der hydroxygruppenhaltigen anorganischen Partikel 2,3 Gew.% oder weniger, bevorzugt 1,3 Gew.% oder weniger, weiter bevorzugt 0,75 Gew.% oder weniger, weiter bevorzugt 0,6 Gew.% oder weniger und 0,01 Gew.% oder mehr, bevorzugt 0,05 Gew.% oder mehr, weiter bevorzugt 0,1 Gew.% oder mehr, weiter bevorzugt 0,15 Gew.% oder mehr, oder 2,3 Gew.% oder weniger und 0,01 Gew.% oder mehr, bevorzugt 1,3 Gew.% oder weniger und 0,05 Gew.% oder mehr, weiter bevorzugt 0,75 Gew.% oder weniger und 0,1 Gew.% oder mehr, weiter bevorzugt 0,6 Gew.% oder weniger und 0,15 Gew.% oder mehr bezogen auf das Gesamtgewicht der Vergussmasse beträgt.

Die Menge an eingesetzten hydroxygruppenhaltigen anorganischen Partikeln richtet sich auch nach der Menge der Isocyanatgruppen, die in der Isocyanatkomponente vorhanden sind. Insbesondere besteht bei zu hohem Anteil der hydroxygruppenhaltigen Partikel die Gefahr der zu starken makroskopischen Vernetzung. Zudem kann die Viskosität der Vergussmasse so stark ansteigen, dass Hohlfasermembranfilter mit besonders hoher Packungsdichte nicht mehr sicher druckdicht hergestellt werden können. Bei zu geringen Anteilen wird dagegen gegebenenfalls ein geringerer Anstieg der Glastemperatur der nach dem erfindungsgemäßen Verfahren erhaltenen ausgehärteten Polyurethanharze erhalten.

In einer Ausführung des ersten Aspekts der Erfindung ist das Verfahren zum Vergießen der Hohlfasermembranen dadurch gekennzeichnet, dass es sich bei den hydroxygruppenhaltigen anorganischen Partikeln um siliziumdioxid- ($SiO_2$), zirkondioxid-($ZrO_2$) aluminiumoxid- ($Al_2O_3$) oder titandioxidhaltige ($TiO_2$) Partikel oder Mischungen von diesen Partikeln handelt. Hydroxygruppenhaltige Partikel aus Siliziumdioxid, Aluminiumoxid oder Titandioxid sind insbesondere vorteilhaft, da sie bezüglich der oberflächengebundenen Hydroxygruppen stabil sind und die Zahl der Hydroxygruppen hinreichend genau bestimmt werden kann. Die genaue Kenntnis der Zahl der Hydroxygruppen der hydroxygruppenhaltigen anorganischen Partikel dient dazu, um das das erforderliche stöchiometrische Verhältnis der Isocyanatgruppen der Isocyanatkomponente und der Hydroxygruppen in der Polyolkomponente zur Herstellung der Vergussmasse aufeinander abstimmen zu können. Zudem sind Partikel aus Siliziumdioxid, Aluminiumoxid und Titandioxid einfach und kostengünstig verfügbar.

In einer weiteren Ausführung des ersten Aspekts der Erfindung ist das Verfahren zum Vergießen der Hohlfasermembranen dadurch gekennzeichnet, dass die hydroxygruppenhaltigen anorganischen Partikel eine Hydroxygruppenzahl von $1 \times 10^{-5}$ mol/g bis $1 \times 10^{-2}$ mol/g, bevorzugt $5 \times 10^{-4}$ mol/g bis $1 \times 10^{-2}$ mol/g, bezogen auf die Masse der hydroxygruppenhaltigen anorganischen Partikel aufweisen. Bei diesen Konzentrationsverhältnissen der Hydroxygruppen auf der Oberfläche der hydroxygruppenhaltigen Partikel ist die Adduktbildung mit der einhergehenden Glasübergangstemperaturerhöhung besonders günstig.

In einer weiteren Ausführung des ersten Aspekts ist das erfindungsgemäße Verfahren dadurch gekennzeichnet, dass die hydroxygruppenhaltigen anorganischen Partikel vor der Umsetzung mit der Isocyanatkomponente bei Temperaturen von 100°C bis 150°C bis zur Gewichtskonstanz getrocknet werden. Die Trocknung der hydroxygruppenhaltigen Partikel bewirkt, dass das auf der Oberfläche der Partikel adsorbiertes Wasser entfernt wird. Wasser führt zu Nebenreaktionen mit der Isocyanatkomponente und wirkt sich negativ auf die Herstellung der Vergussmasse und den Aushärteprozess aus. Eine Trocknung der Partikel oberhalb 100°C ist effektiv, um adsorbiertes Wasser zu entfernen. Eine zu hohe Trocknungstemperatur kann zur Abspaltung der oberflächengebundenen Hydroxygruppen führen und ist daher zu vermeiden.

In einer weiteren Ausführung des ersten Aspekts der Erfindung ist das Verfahren zum Vergießen der Hohlfasermembranen dadurch gekennzeichnet, dass die Zusammensetzung ein Molverhältnis von Isocyanatgruppen der Isocyanatkomponente zu Hydroxygruppen der hydroxygruppenhaltigen anorganischen Partikel mindestens 100 zu 1, bevorzugt mindestens 1000:1, aufweist. Diese Molverhältnisse haben sich als günstig erwiesen, da so eine ausreichende Absättigung der Hydroxygruppen der Partikel sichergestellt ist. Gleichermaßen bleibt durch das vorgewählte Molverhältnis eine ausreichende Anzahl an freien Isocyanatgruppen vorhanden, die für den späteren Aufbau des Polyurethanharzes verantwortlich sind. Es hat sich zudem gezeigt, dass es bei einem zu geringen Molverhältnis dazu kommen kann, dass ein Diisocyanatmolekül mit einer Isocyanatgruppe unter Ausbildung einer Urethanbindung mit einer Hydroxygruppe reagiert und dass gleichzeitig die zweite Isocyanatgruppe mit einer weiteren Hydroxygruppe abreagiert. Wird das Molverhältnis eingehalten, ergeben sich besonders hohe Steigerungen der Glasübergangstemperatur.

In einer weiteren Ausführung des ersten Aspekts der Erfindung ist das erfindungsgemäße Verfahren dadurch gekennzeichnet, dass ein nahezu stöchiometrisches Molverhältnis von 0,9 zu 1,1 bis 1,1 zu 0,9, bevorzugt von 0,99 zu 1,01 bis 1,01 zu 0,99, der Hydroxygruppen der Polyolkomponente und der freien Isocyanatgruppen der Zusammensetzung, enthaltend das isocyanatgruppenhaltige Addukt, eingestellt wird. Besonders bevorzugt ist eine exakte Einstellung der Molverhältnisse von 1 zu 1. Mit der Einstellung des Molverhältnisse können hohe Umsätze der Polyolkomponente mit der Zusammensetzung, enthaltend das isocyanathaltige Addukt, erreicht werden. Dadurch wird der Gehalt an Restmonomeren im zum Polyurethanharz ausgehärteten Vergussmasse im Polyurethanharz vermieden, die z.B. unter Filtrationsanwendung der vergossenen Hohlfasermembranen eluieren können.

In einem zweiten Aspekt betrifft ist die Erfindung einen Hohlfasermembranfilter aufweisend eine Vielzahl von Hohlfasermembranen, die in wenigstens einer Vergusszone in einem Polyurethanharz vergossen sind, dadurch gekennzeichnet, dass das Polyurethanharz wenigstens 0,01 Gew.% bis 2,3 Gew.% anorganische Partikel, bezogen auf das Gesamtgewicht des Polyurethanharzes, aufweist, die über Urethanbindungen in dem Polyurethanharz gebunden sind, wobei wenigstens ein Teil der Hydroxygruppen der hydroxygruppenhaltigen anorganischen Partikel mit wenigstens einem Teil der Isocyanatgruppen der Isocyanatkomponente zu Urethanbindungen umgesetzt sind. Die Menge der anorganischen Partikel richtet sich auch nach der Menge der Urethanbindungen, die zwischen den anorganischen Partikeln und dem Polyurethanharz ausgebildet werden können. Insbesondere besteht bei zu hohem Anteil der anorganischen Partikel, die aus den hydroxygruppenhaltigen anorganischen Partikeln gemäß einer Ausführung des ersten Aspekts der Erfindung erhalten werden können, die Gefahr, dass die Vergussmasse nicht zum Polyurethanharz verarbeitet werden kann. Bei zu geringen Anteilen ist der Anstieg der Glastemperatur des Polyurethanharzes zu gering.

In einer Ausführung des zweiten Aspekts der Erfindung ist der Hohlfasermembranfilter dadurch gekennzeichnet, dass die durch die Urethanbindungen im Polyurethanharz gebundenen anorganischen Partikel aus siliziumdioxid- ($SiO_2$), zirkondioxid- ($ZrO_2$), aluminiumoxid- ($Al_2O_3$) oder titandioxidhaltigen ($TiO_2$) Partikeln oder Mischungen dieser Partikel bestehen. Die siliziumhaltigen und titandioxidhaltigen Partikel sind bevorzugt, da sie bezüglich der Korngröße und der Urethanbindungen hinreichend genau bestimmbar sind. Die Kenntnis der Zahl der Urethanbindungen mit der die Partikel in das Polyurethanharz eingebunden sind ist wichtig, um die thermische Stabilität des Polyurethanharzes einzustellen zu können.

In einer weiteren Ausführung des zweiten Aspekts der Erfindung ist der Hohlfasermembranfilter dadurch gekennzeichnet, dass die anorganischen Partikel eine gewichtsmittlere Korngröße von 200 nm oder weniger, bevorzugt von 150 nm oder weniger, weiter bevorzugt 100 nm oder weniger weiter bevorzugt 50 nm oder weniger und mindestens 1 nm oder mehr, oder 2nm oder mehr, oder 5 nm oder mehr aufweisen. Geringere mittlere Korngrößen sind bevorzugt, da diese Partikel eine höhere Anzahl von Hydroxygruppen aufweisen. Zu niedrige Korngrößen können aufgrund der Agglomeratbildung nachteilig sein.

In einer weiteren Ausführung des zweiten Aspekts der Erfindung ist der Hohlfasermembranfilter dadurch gekennzeichnet, dass das Polyurethanharz 1,3 Gew.% oder weniger, bevorzugt 0,75 Gew.% oder weniger, weiter bevorzugt 0,6 Gew.% oder weniger und 0,05 Gew.% oder mehr, weiter bevorzugt 0,1 Gew.% oder mehr, weiter bevorzugt 0,15 Gew.% oder mehr, oder 1,3 Gew.% oder weniger und 0,05 Gew.% oder mehr, weiter bevorzugt 0,75 Gew.% oder weniger und 0,1 Gew.% oder mehr, weiter bevorzugt 0,6 Gew.% oder weniger und 0,15 Gew.% beträgt, wobei die Gew.% auf das Gesamtgewicht des Polyurethanharzes bezogen sind.

In einer weiteren Ausführung des zweiten Aspektes der Erfindung ist der Hohlfasermembranfilter dadurch gekennzeichnet, dass das Polyurethanharz eine Glasübergangstemperatur aufweist, die um 3°C oder mehr, bevorzugt um 5°C oder mehr, weiter bevorzugt 7 °C oder mehr, oder vorzugsweise bis zu bis zu 12°C weiter vorzugsweise bis zu 14°C erhöht ist gegenüber einem entsprechenden Polyurethanharz, welches keine urethangebundenen anorganischen Partikel aufweist, aber aus der gleichen Isocyanatkomponente und der gleichen Polyolkomponente hergestellt ist. Die Glasübergangstemperatur wird nach der "Messmethode DSC" bestimmt. Es zeigte sich, dass das Polyurethanharz, welches die urethangebundene anorganische Partikel beinhaltet eine höhere Temperaturbeständigkeit aufweist. Dies ist insbesondere wichtig bei Wasserfiltern, die bei höherer Temperatur betrieben werden. Hier weisen die erfindungsgemäßen Hohlfasermembranfilter eine besonders gute Beständigkeit, insbesondere Hydrolysebeständigkeit, auf.

In einer weiteren Ausführung des zweiten Aspekts der Erfindung ist der Hohlfasermembranfilter dadurch gekennzeichnet, dass das Vergießen der Hohlfasermembranen in dem Polyurethanharz nach wenigstens einem der Ausführungen gemäß dem ersten Aspekt erfolgt.

In einer weiteren Ausführungsform des zweiten Aspektes der Erfindung ist der Hohlfasermembranfilter dadurch gekennzeichnet, dass die raumausfüllende Packungsdichte der Hohlfasermembranen in dem Gehäuse des Hohlfasermembranfilters von 50 bis 70 %, insbesondere von 60 bis 70%, weiter insbesondere von 55 bis 65%, beträgt. Bei zylindrischen Hohlfasermembranfiltern mit Hohlfasermembranen gleichen Durchmessers ergibt sich die Packungsdichte aus dem Quadrat des Durchmessers der Hohlfasermembranen zu dem Durchmesser des Gehäuses:

$$\delta_{(Packungsdichte)} = n \cdot \frac{d_{(Faser)}^2}{d_{(Gehäuse)}^2}$$

- mit n ist Anzahl der Hohlfasern bezeichnet,
- mit $d_{(Faser)}$ ist der Durchmesser der Hohlfasermembran bezeichnet, gemessen wird der Druchmesser von der äußeren Membranoberfläche (äußerer Durchmesser),
- mit $d_{(Gehäuse)}$ ist der Durchmesser Gehäuses bezeichnet, gemessen wird die lichte Weite des Gehäuses (innerer Druchmesser).

Bei solch hohen Packungsdichten ist es besonders schwierig, einen druck- und wasserdichten Verguss der Hohlfasern des Hohlfasermembranfilters bereitzustellen. Einerseits muss die Vergussmasse vor der Aushärtung eine besonders niedrige Viskosität aufweisen, da die Faserzwischenreäume besonders eng sind, andererseits ist eine gute Wärme- und Heißwasserbeständigkeit gewünscht, die von niedrigviskosen Vergussmassen oft nicht erreicht wird. Hohlfasermembranfilter, die das erfindungsgemäße Polyurethanharz aufweisen, sind bei hoher Packungsdichte druckdicht vergossen und weisen gleichzeitig eine hohe Temperaturbeständigkeit auf.

Ein dritter Aspekt betrifft die vorliegende Offenbarung ein isocyanatgruppenhaltige Addukt, erhalten durch Umsetzen wenigstens einer Isocyanatkomponente, enthaltend zumindest eine Diisocyanatverbindung, und hydroxygruppenhaltigen anorganischen Partikeln, wobei wenigstens ein Teil der Hydroxygruppen der hydroxygruppenhaltigen anorganischen Partikel mit wenigstens einem Teil der Isocyanatkomponente zu Urethanbindung umgesetzt sind, und wobei in dem erhaltenen Addukt freie Isocyanatgruppen vorhanden sind. Das isocyantgruppenhaltige Addukt weist den Vorteil auf, dass es zusammen mit einer Polyolkomponente zu einer aushärtbaren Vergussmasse gemischt werden kann, die eine gute Verarbeitbarkeit innerhalb der Topfzeit gewährleistet und eine vollständige Einbettung der Hohlfasermembranen in der Vergussmasse ermöglicht. Weiterhin bietet das isocyanatgruppenhaltige Addukt den Vorteil, dass die zum Polyurethanharz ausgehärtete Vergussmasse eine erhöhte Glasübergangstemperatur aufweist und das Polyurethanharz damit eine verbesserte thermische Stabilität in Filtrationsanwendungen bei erhöhten Temperaturen hat.

In einer Ausführungsform des dritten Aspekts ist das isocyanatgruppenhaltige Addukt dadurch gekennzeichnet, dass mindestens 70%, bevorzugt mindestens 90%, weiter bevorzugt mindestens 98% aller reaktiven Hydroxyruppen der anorganischen Partikel zu Urethanbindungen umgesetzt sind. Unter *"reaktiv"* wird in diesem Zusammenhang die Reaktivität gegenüber Isocyanatgruppen im Sinne einer Umsetzung zur Urethanbindung verstanden. Eine gute Absättigung der Hydroxygruppen des anorganischen Partikels bewirkt erfindungsgemäß einen hohen Anstieg des Glasübergangspunktes und somit eine gute Hydrolysebeständigkeit des Polyurethanharzes.

In einer Ausführungsform des dritten Aspekts ist das isocyanatgruppenhaltige Addukt dadurch gekennzeichnet, dass das Molverhältnis der Urethanbindungen der anorganischen Partikel zu freien Isocyanatgruppen von 1 zu 100 bis 1 zu 10.000, bevorzugt von 1:1000 bis 1 zu 10.000, beträgt. Diese Molverhältnisse haben sich als günstig erwiesen, da so eine ausreichende Absättigung der hydroxygruppen der Partikel sichergestellt ist. Gleichermaßen bleibt durch das vorgewählte Molverhältnis eine ausreichende Anzahl an freien Isocyanatgruppen vorhanden, die für den späteren Aufbau des Polyurethanharzes verantwortlich sind. Es hat sich zudem gezeigt, dass es bei einem zu geringen Molverhältnis dazu kommen kann, dass ein Diisocyanatmolekül mit einer Isocyanatgruppe unter Ausbildung einer Urethanbindung mit einer Hydroxygruppe reagiert und dass gleichzeitig die zweite Isocyanatgruppe mit einer weiteren Hydroxygruppe abreagiert. Wird das Molverhältnis eingehalten, ergeben sich besonders hohe Steigerungen der Glasübergangstemperatur.

In einer weiteren Ausführungsform des dritten Aspekts ist das isocyanatgruppenhaltige Addukt dadurch gekennzeichnet, dass die anorganischen Partikel aus siliziumdioxid- ($SiO_2$), zirkonoxid- ($ZrO_2$), aluminiumoxid- ($Al_2O_3$), oder titandioxidhaltigen ($TiO_2$) Partikeln oder Mischungen dieser Partikel bestehen. Hydroxygruppenhaltige Partikel aus Siliziumdioxid, Aluminiumoxid oder Titandioxid sind insbesondere vorteilhaft, da sie bezüglich der oberflächengebundenen Hydroxygruppen stabil sind und die Zahl der Hydroxygruppen hinreichend genau bestimmt werden kann. Die genaue Kenntnis der Zahl der Hydroxygruppen der hydroxygruppenhaltigen anorganischen Partikel dient dazu, um das das erforderliche stöchiometrische Verhältnis der Isocyanatgruppen der Isocyanatkomponente und der Hydroxygruppen in der Polyolkomponente zur Herstellung der Vergussmasse aufeinander abstimmen zu können. Zudem sind Partikel aus Siliziumdioxid, Aluminiumoxid und Titandioxid einfach und kostengünstig verfügbar.

In einer weiteren Ausführungsform des dritten Aspekts ist das isocyanatgruppenhaltiges Addukt dadurch gekennzeichnet, dass die anorganischen Partikel eine gewichtsmittlere Korngröße von 200 nm oder weniger, bevorzugt von 150 nm oder weniger, weiter bevorzugt 100 nm oder weniger, weiter bevorzugt 50 nm oder weniger und mindestens 1 nm oder mehr, oder 2 nm oder mehr, oder 5 nm aufweisen.

In einer weiteren Ausführungsform des dritten Aspekts ist das isocyanatgruppenhaltiges Addukt dadurch gekennzeichnet, dass die Anzahl der Urethanbindungen zwischen der Isocyanatkomponente und den anorganischen Partikeln $1 \times 10^{-5}$ mol/g bis $1 \times 10^{-2}$ mol/g, bevorzugt $5 \times 10^{-4}$ mol/g bis $1 \times 10^{-2}$ mol/g, bezogen auf die Masse der hydroxygruppenhaltigen anorganischen Partikel beträgt. Bei diesen Konzentrationsverhältnissen der Hydroxygruppen auf der Oberfläche der hydroxygruppenhaltigen Partikel ist die Adduktbildung mit der einhergehenden Glasübergangstemperaturerhöhung besonders günstig.

In einem vierten Aspekt betrifft die Erfindung die Verwendung eines isocyanathaltigen Addukts in einem Verfahren zum Vergießen von Hohlfasermembranen, wobei das isocyanatgruppenhaltige Addukt erhalten wird durch Umsetzen wenigstens einer Isocyanatkomponente, enthaltend zumindest eine Diisocyanatverbindung, und hydroxygruppenhaltigen anorganischen Partikeln, wobei wenigstens ein Teil der Hydroxygruppen der hydroxygruppenhaltigen anorganischen Partikel mit wenigstens einem Teil der Isocyanatgruppen der Isocyanatkomponente zu Urethanbindung umgesetzt sind, und wobei in dem erhaltenen Addukt freie Isocyanatgruppen vorhanden sind.

## AUSFÜHRUNGSBEISPIELE UND METHODEN

### Verwendete Materialien

Polyolkomponente: Arathane CW5631 der Fa. Huntsman Isocyanatkomponente: Arathane HY 5610 der Fa. Huntsman Hydroxygruppenhaltige anorganische Partikel:

(1) $TiO_2$ UV100 der Firma Huntsman
2,5 - 5 Hydroxygruppen pro $nm^2$ Partikeloberfläche gewichtsmittlere Partikelgröße 10 nm, BET Oberfläche 330+/- 15 $m^2/g$

(2) $TiO_2$ P25 der Firma Evonik
4-5 Hydroxygruppen pro $nm^2$ Partikeloberfläche gewichtsmittlere Partikelgröße 20-25 nm BET Oberfläche 55 $m^2/g$

(3) $TiO_2$ AT-1 der Firma Crystal,
1,4 Hydroxygruppen pro $nm^2$ Partikeloberfläche gewichtsmittlere Partikelgröße 200 nm BET Oberfläche 9 $m2/g$

(4) $SiO_2$ Aerosil 300 der Firma Evonik
1,9 Hydroxygruppen pro $nm^2$ Partikeloberfläche, gewichtsmittlere Partikelgröße 7 nm BET Oberfläche 300 $m^2/g$,

### Messmethode der Korngrößenbestimmung

Korngrößenverteilungen bzw. gewichtsmittlere Korngrößen bei feinen Partikeln unter 50 nm werden mit Hilfe der Transmissionselektronenmikroskopie ermittelt. Dazu wird eine Probe der Partikel im Transmissionselektronenmikroskop vermessen, wobei für eine Anzahl von Partikeln (1000) der Durchmesser und das Aspektverhältnis bei länglichen Partikel bestimmt wird. Daraus kann rechnerisch die Partikelgrößenverteilung und somit auch die gewichtsmittlere Korngröße ermittelt werden. Bei Proben mit größerer gewichtsmittlerer Korngröße wird die Laserbeugungsmethode angewendet.

### Messmethode zur Bestimmung der Glasübergangstemperatur - DSC

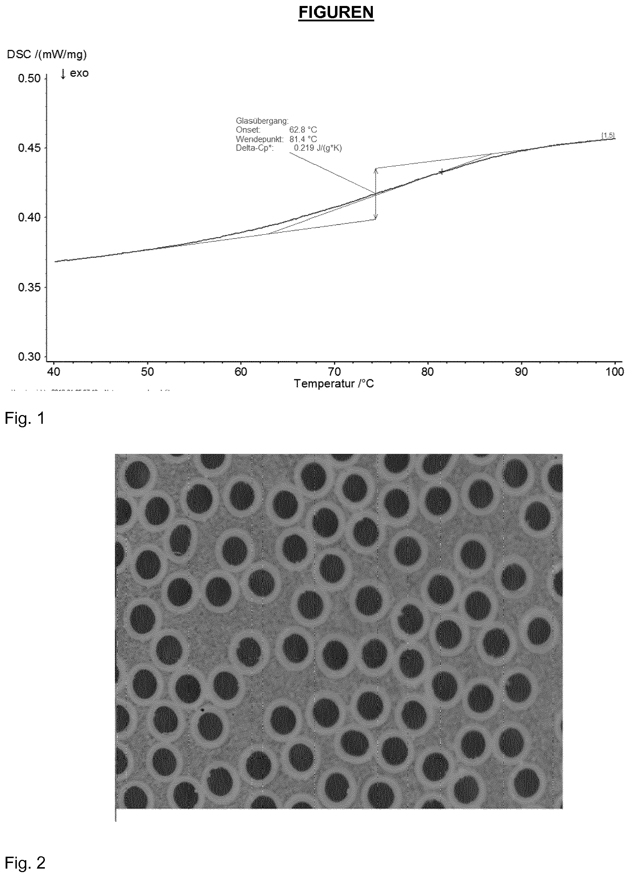

Die Bestimmung der Glastemperatur wird mit einem Gerät DSC 200F3 der Firma Netsch durchgeführt. Es werden Proben von 5mg der zum Polyurethanharz ausgehärteten Vergussmasse verwendet. Die entnommenen Proben werden in einem Aluminiumtiegel in der Probenaufnahme des DSC Geräts positioniert. Der Bereich der Probenaufnahme wird mit Stickstoff fortlaufen gespült. Das Aufheizen der Probe erfolgt in einem Temperaturberich von -5°C bis 120°C. Die Heizrate betrug 10°C/ min. Danach wurde die Probe mit einer Kühlrate von 10°C/ min abgekühlt. Das Wiederaufheizen der Proben erfolgte im Temperaturbereich von -5°C bis120°C. Für die Auswertung wurde der zweite Heizverlauf verwendet. Der Glasübergang wurde aus dem Onset des Glasübergangsbereiches der aufgezeichneten Temperaturkurve bestimmt. Eine graphische Darstellung einer DSC- Kurve ist für ein Beispiel eines Polyurethans in Fig. 1 angegeben. Der Onset ist ein besonders aussagekräftiger Parameter zur Bestimmung der thermischen Hydrolyseeigenschaften, weil er den Beginn dieser Veränderungen mit steigender Temperatur anzeigen kann. In den Ausführungsbeispielen wird das Vergleichsbeispiel 1 (Basis) als Ausgangspunkt herangezogen und die Änderung des Onsets des Glasübergangspunktes in °C bestimmt.

### Messmethode zur Druckdichtheitsbestimmung

Zur Ermittlung der Druckdichtigkeit wird eine Stirnseite der Vergusszone optisch geprüft. Die Stirnseite wird erzeugt, indem ein Schnitt endseitigen durch die Vergusszone geführt wird. Dadurch werden die lumenseitigen Öffnungen der Hohlfasermembranen in der Vergusszone freigelegt. Es wird durch optische Analyse geprüft, ob die Hohlfasermembranen in der Vergusszone dicht vom Polyurethanharz umschlossen sind. Fig. 2 zeigt beispielhaft Abbildung einer so erzeugten Stirnseite einer Vergusszone.

### Vergleichsbeispiel 1

100 g der Polyolkomponente wurden mit 25 g der Isocyanatkomponente zu einer Vergussmasse gemischt. In einem zylindrischen Filtergehäuse mit einem inneren Durchmesser von 34 mm wurde ein Hohlfasermembranbündel bestehend aus 10752 Hohlfasermembranen, bestehend aus Polysulfon und Polyvinylpyrrolidon, eingeschoben. In allen Beispielen werden die gleichen Membranen verwendet. Die Herstellung solcher Membranen ist in der PCT/EP2017/081955 beschrieben. Der Außendurchmesser der Fasern betrug 255 $\mu m$, die Wandstärke 35 $\mu m$. Die Packungsdichte betrug 60,5%. Das Filtergehäuse wurde für das Vergießen der Hohlfasermembranen bereitgestellt. Die Vergusszone umfasste die Faserenden der Hohlfasermembranen. Es wurde soviel Polyurethanharz zugefügt, so dass eine Vergusshöhe von 22 mm gewährleistet werden konnte. Die Vergussmasse wurde im Rotationsverfahren zur Vergusszone in das Filtergehäuse eingeleitet nach der in EP 2 024 067A1 beschriebenen Methode und bei 45°C zum Polyurethanharz ausgehärtet. Das Filtergehäuse mit den druckdicht vergossenen Hohlfasern wird nach 30 min. entnommen. Es wurde eine Probe der zum Polyurethanharz ausgehärteten Vergussmasse von ca. 5 mg entnommen und die Glasübergangstemperatur mittels DSC- Analyse bestimmt. Die bestimmte Glasübergangstemperatur (Onset) wurde als Basis für die weiteren Versuche verwendet.

**Beispiel 1**

Aerosil 300 wurde bei 110°C zur Gewichtskonstanz getrocknet. 23 g des Aerosil 300 wurden in 977g der Isocyanatkomponente vermischt und für 24 h bei Raumtemperatur gerührt. Es wurde eine Zusammensetzung erhalten, die das isocyanathaltige Addukt aus Aerosil 300 und der Isocyanatkomponente enthält. 100 g der Polyolkomponente und 25,6 g der erhaltenen Zusammensetzung, enthaltend das isocyanathaltige Addukt, wurden zu einer Vergussmasse gemischt. In einem zylindrischen Filtergehäuse mit einem inneren Durchmesser von 34 mm wurde ein Hohlfasermembranbündel bestehend aus 10752 Hohlfasermembranen eingeschoben. Der Außendurchmesser der Fasern betrug 255 $\mu$m, die Wandstärke 35 $\mu$m. Die Packungsdichte betrug 60,5%. Das Filtergehäuse wurde für das Vergießen der Hohlfasermembranen bereitgestellt. Die Vergusszone umfasste die Faserenden der Hohlfasermembranen. Es wurde soviel Polyurethanharz zugefügt, so dass eine Vergusshöhe von 22 mm gewährleistet werden konnte. Die Vergussmasse wurde im Rotationsverfahren nach der in der EP 2 024 067 A1 beschriebenen Methode zur Vergusszone in das Filtergehäuse eingeleitet und bei 45°C zum Polyurethanharz ausgehärtet. Es bildete sich ein Verguss, in dem die Hohlfasermembranen druckdicht vom Polyurethanharz umschlossen waren. Der Anteil der SiO$_2$ Partikel im Vergussmaterial betrug 0,5 Gew.%. Es wurde eine Probe der zum Polyurethanharz ausgehärteten Vergussmasse von ca. 5 mg entnommen und die Glasübergangstemperatur mittels DSC- Analyse bestimmt. Die Erhöhung der Glasübergangstemperatur des Polyurethanharzes gegenüber dem Polyurethanharz, das nach Vergleichsbeispiel 1 hergestellt wurde betrug 6,3 °C.

**Beispiel 2**

UV100 wurde für bei 110°C zur Gewichtskonstanz getrocknet. 53 g des UV100 wurden mit 947g der Isocyanatkomponente vermischt und für 24 h bei Raumtemperatur gerührt. Es wurde eine Zusammensetzung erhalten, die ein isocyanathaltiges Addukt aus UV100 und der Isocyanatkomponente enthält. 100 g der Polyolkomponente und 26,5 g der erhaltenen Zusammensetzung, enthaltend das isocyanathaltige Addukt, wurden zu einer Vergussmasse gemischt. In einem zylindrischen Filtergehäuse mit einem inneren Durchmesser von 34 mm wurde ein Hohlfasermembranbündel bestehend aus 10752 Hohlfasermembranen eingeschoben. Der Außendurchmesser der Fasern betrug 255 $\mu$m, die Wandstärke 35 $\mu$m. Die Packungsdichte betrug 60,5%. Das Filtergehäuse wurde für das Vergießen der Hohlfasermembranen bereitgestellt. Die Vergusszone umfasste die Faserenden der Hohlfasermembranen. Es wurde soviel Polyurethanharz zugefügt, so dass eine Vergusshöhe von 22 mm gewährleistet werden konnte. Die Vergussmasse wurde im Rotationsverfahren nach der in der EP 2 024 067 A1 beschriebenen Methode zur Vergusszone in das Filtergehäuse eingeleitet und bei 45°C zum Polyurethanharz ausgehärtet. Es bildete sich ein Verguss, in dem die Hohlfasermembranen druckdicht vom Polyurethanharz umschlossen waren. Der Anteil der anorganischen Partikel im Vergussmaterial betrug 1,2 Gew.%. Es wurde eine Probe der zum Polyurethanharz ausgehärteten Vergussmasse von ca. 5 mg entnommen und die Glasübergangstemperatur mittels DSC- Analyse bestimmt. Die Erhöhung der Glasübergangstemperatur des Polyurethanharzes gegenüber dem Polyurethanharz, das nach Vergleichsbeispiel 1 hergestellt wurde betrug 7,1 °C.

**Beispiel 3**

UV100 wurde bei 110°C zur Gewichtskonstanz getrocknet. 23 g des UV100 wurden mit 977 g der Isocyanatkomponente vermischt und für 24 h bei Raumtemperatur gerührt. Es wurde eine Zusammensetzung erhalten, die ein isocyanathaltiges Addukt aus UV100 und der Isocyanatkomponente enthält. 100 g der Polyolkomponente und 25,6 g der erhaltenen Zusammensetzung, enthaltend das isocyanathaltige Addukt, wurden zu einer Vergussmasse gemischt. In einem zylindrischen Filtergehäuse mit einem inneren Durchmesser von 34 mm wurde ein Hohlfasermembranbündel bestehend aus 10752 Hohlfasermembranen eingeschoben. Der Außendurchmesser der Fasern betrug 255 $\mu$m, die Wandstärke 35 $\mu$m. Die Packungsdichte betrug 60,5%. Das Filtergehäuse wurde für das Vergießen der Hohlfasermembranen bereitgestellt. Die Vergusszone umfasste die Faserenden der Hohlfasermembranen. Es wurde soviel Polyurethanharz zugefügt, so dass eine Vergusshöhe von 22 mm gewährleistet werden konnte. Die Vergussmasse wurde im Rotationsverfahren nach der in der EP 2 024 067A1 beschriebenen Methode zur Vergusszone in das Filtergehäuse eingeleitet und bei 45°C zum Polyurethanharz ausgehärtet. Es bildete sich ein Verguss, in dem die Hohlfasermembranen druckdicht vom Polyurethanharz umschlossen waren. Der Anteil der anorganischen Partikel im Vergussmaterial betrug 0,5 Gew.%. Es wurde eine Probe der zum Polyurethanharz ausgehärteten Vergussmasse von ca. 5 mg entnommen und die Glasübergangstemperatur mittels DSC- Analyse bestimmt. Die Erhöhung der Glasübergangstemperatur des Polyurethanharzes gegenüber dem Polyurethanharz, das nach Vergleichsbeispiel 1 hergestellt wurde betrug 8 °C.

**Beispiel 4**

UV100 wurde bei 110°C zur Gewichtskonstanz getrocknet. 7,5 g des LIV100 wurden mit 992,5 g der Isocyanatkomponente vermischt und für 24 h bei Raumtemperatur gerührt. Es wurde eine Zusammensetzung erhalten, die ein isocyanathaltiges Addukt aus UV100 und der Isocyanatkomponente enthält. 100 g der Polyolkomponente und 25,2 g der erhaltenen Zusammensetzung, enthaltend das isocyanathaltige Addukt, wurden zu einer Vergussmasse gemischt. In einem zylindrischen Filtergehäuse mit einem inneren Durchmesser von 34 mm wurde ein Hohlfasermembranbündel bestehend aus 11230 Hohlfasermembranen eingeschoben. Der Außendurchmesser der Fasern betrug 255 $\mu$m, die Wandstärke 35 $\mu$m. Die Packungsdichte betrug 63,2%. Das Filtergehäuse wurde für das Vergießen der Hohlfasermembranen bereitgestellt. Die Vergusszone umfasste die Faserenden der Hohlfasermembranen. Es wurde soviel Polyurethanharz zugefügt, so dass eine Vergusshöhe von 22 mm gewährleistet werden konnte. Die Vergussmasse wurde im Rotationsverfahren nach der in der EP 2 024 067A1 beschriebenen Methode zur Vergusszone in das Filtergehäuse eingeleitet und bei 45°C zum Polyurethanharz ausgehärtet. Es bildete sich ein Verguss, in dem die Hohlfasermembranen druckdicht vom Polyurethanharz umschlossen waren. Der Anteil der anorganischen Partikel im Vergussmaterial betrug 0,2 Gew.%. Es wurde eine Probe der zum Polyurethanharz ausgehärteten Vergussmasse von ca. 5 mg entnommen und die Glasübergangstemperatur mittels DSC- Analyse bestimmt. Die Erhöhung der Glasübergangstemperatur des Polyurethanharzes gegenüber dem Polyurethanharz, das nach Vergleichsbeispiel 1 hergestellt wurde betrug 4,7°C.

**Beispiel 5**

P25 wurde bei 110°C zur Gewichtskonstanz getrocknet. 53 g des P25 wurden mit 980g der Isocyanatkomponente vermischt und für 24 h bei Raumtemperatur gerührt. Es wurde eine Zusammensetzung erhalten, die ein isocyanathaltiges Addukt aus P25 und der Isocyanatkomponente enthält. 100 g der Polyolkomponente und 26,5 g der erhaltenen Zusammensetzung, enthaltend das isocyanathaltige Addukt, wurden zu einer Vergussmasse gemischt. In einem zylindrischen Filtergehäuse mit einem inneren Durchmesser von 34 mm wurde ein Hohlfasermembranbündel bestehend aus 10752 Hohlfasermembranen eingeschoben. Der Außendurchmesser der Fasern betrug 255 $\mu$m, die Wandstärke 35 $\mu$m. Die Packungsdichte betrug 60,5%. Das Filtergehäuse wurde für das Vergießen der Hohlfasermembranen bereitgestellt. Die Vergusszone umfasste die Faserenden der Hohlfasermembranen. Es wurde soviel Polyurethanharz zugefügt, so dass eine Vergusshöhe von 22 mm gewährleistet werden konnte. Die Vergussmasse wurde im Rotationsverfahren nach der in der EP 2 024 067 A1 beschriebenen Methode zur Vergusszone in das Filtergehäuse eingeleitet und bei 45°C zum Polyurethanharz ausgehärtet. Es bildete sich ein Verguss, in dem die Hohlfasermembranen druckdicht vom Polyurethanharz umschlossen waren. Der Anteil der $TiO_2$ Partikel im Vergussmaterial betrug 1,2 Gew.%. Es wurde eine Probe der zum Polyurethanharz ausgehärteten Vergussmasse von ca. 5 mg entnommen und die Glasübergangstemperatur mittels DSC- Analyse bestimmt. Die Erhöhung der Glasübergangstemperatur des Polyurethanharzes gegenüber dem Polyurethanharz, das nach Vergleichsbeispiel 1 hergestellt wurde betrug 9,5°C.

**Beispiel 6**

AT1 wurde bei 110°C zur Gewichtskonstanz getrocknet. 23g des AT1 wurden mit 977g der Isocyanatkomponente vermischt und für 24 h bei Raumtemperatur gerührt. Es wurde eine Zusammensetzung erhalten, die ein isocyanathaltiges Addukt aus AT1 und der Isocyanatkomponente enthält. 100 g der Polyolkomponente und 25,6 g der erhaltenen Zusammensetzung, enthaltend das isocyanathaltige Addukt, wurden zu einer Vergussmasse gemischt. In einem zylindrischen Filtergehäuse mit einem inneren Durchmesser von 34 mm wurde ein Hohlfasermembranbündel bestehend aus 10752 Hohlfasermembranen eingeschoben. Der Außendurchmesser der Fasern betrug 255 $\mu$m, die Wandstärke 35 $\mu$m. Die Packungsdichte betrug 60,5%. Das Filtergehäuse wurde für das Vergießen der Hohlfasermembranen bereitgestellt. Die Vergusszone umfasste die Faserenden der Hohlfasermembranen. Es wurde soviel Polyurethanharz zugefügt, so dass eine Vergusshöhe von 22 mm gewährleistet werden konnte. Die Vergussmasse wurde im Rotationsverfahren nach der in der EP 2 024 067A1 beschriebenen Methode zur Vergusszone in das Filtergehäuse eingeleitet und bei 45°C zum Polyurethanharz ausgehärtet. Es bildete sich ein Verguss, in dem die Hohlfasermembranen druckdicht vom Polyurethanharz umschlossen waren. Der Anteil der $TiO_2$ Partikel im Vergussmaterial betrug 0,5 Gew.%. Es wurde eine Probe der zum Polyurethanharz ausgehärteten Vergussmasse von ca. 5 mg entnommen und die Glasübergangstemperatur mittels DSC- Analyse bestimmt. Die Erhöhung der Glasübergangstemperatur des Polyurethanharzes gegenüber dem Polyurethanharz, das nach Vergleichsbeispiel 1 hergestellt wurde betrug 7,2 °C.

**Beispiel 7**

UV100 wurde für bei 110°C zur Gewichtskonstanz getrocknet. 96 g des UV100 wurden mit 904 g der Isocyanatkomponente vermischt und für 24 h bei Raumtemperatur gerührt. Es wurde eine Zusammensetzung erhalten, die ein isocyanathaltiges Addukt aus UV100 und der Isocyanatkomponente enthält. 100 g der Polyolkomponente und 27,7 g der erhaltenen Zusammensetzung, enthaltend das isocyanathaltige Addukt, wurden zu einer Vergussmasse gemischt. In einem zylindrischen Filtergehäuse mit einem inneren Durchmesser von 34 mm wurde ein Hohlfasermembranbündel bestehend aus 8432 Hohlfasermembranen eingeschoben. Der Außendurchmesser der Fasern betrug 255 μm, die Wandstärke 35 μm. Die Packungsdichte betrug 47,4%. Das Filtergehäuse wurde für das Vergießen der Hohlfasermembranen bereitgestellt. Die Vergusszone umfasste die Faserenden der Hohlfasermembranen. Es wurde soviel Polyurethanharz zugefügt, so dass eine Vergusshöhe von 22 mm gewährleistet werden konnte. Die Vergussmasse wurde im Rotationsverfahren nach der in der EP 2 024 067A1 beschriebenen Methode zur Vergusszone in das Filtergehäuse eingeleitet und bei 45°C zum Polyurethanharz ausgehärtet. Es bildete sich ein Verguss, in dem die Hohlfasermembranen druckdicht vom Polyurethanharz umschlossen waren. Der Anteil der anorganischen Partikel im Vergussmaterial betrug 2,0 Gew.%. Es wurde eine Probe der zum Polyurethanharz ausgehärteten Vergussmasse von ca. 5 mg entnommen und die Glasübergangstemperatur mittels DSC- Analyse bestimmt. Die Erhöhung der Glasübergangstemperatur des Polyurethanharzes gegenüber dem Polyurethanharz, das nach Vergleichsbeispiel 1 hergestellt wurde betrug 10,1 °C.

**Vergleichsbeispiel 2**

UV 100 wurde für bei 110°C zur Gewichtskonstanz getrocknet. 8 g des UV100 wurden mit 992g der Polyolkomponente vermischt und für 24 h bei Raumtemperatur gerührt. 100,2g Mischung, enthaltend die Polyolkomponente und UV100, wurden mit 25 g der Isocyanatkomponente zu einer Vergussmasse gemischt. In einem zylindrischen Filtergehäuse mit einem inneren Durchmesser von 34 mm wurde ein Hohlfasermembranbündel bestehend aus 10752 Hohlfasermembranen eingeschoben. Der Außendurchmesser der Fasern betrug 255 μm, die Wandstärke 35 μm. Die Packungsdichte betrug 60,5%. Das Filtergehäuse wurde für das Vergießen der Hohlfasermembranen bereitgestellt. Die Vergusszone umfasste die Faserenden der Hohlfasermembranen. Es wurde soviel Polyurethanharz zugefügt, so dass eine Vergusshöhe von 22 mm gewährleistet werden konnte. Die Vergussmasse wurde im Rotationsverfahren nach der in der EP 2 024 067A1 beschriebenen Methode zur Vergusszone in das Filtergehäuse eingeleitet und bei 45°C zum Polyurethanharz ausgehärtet. Es bildete sich ein Verguss, in dem die Hohlfasermembranen druckdicht vom Polyurethanharz umschlossen waren. Der Anteil der $TiO_2$ Partikel im Vergussmaterial betrug 0,2 Gew.%. Es wurde eine Probe der zum Polyurethanharz ausgehärteten Vergussmasse von ca. 5 mg entnommen und die Glasübergangstemperatur mittels DSC- Analyse bestimmt. Die Erhöhung der Glasübergangstemperatur des Polyurethanharzes gegenüber dem Polyurethanharz, das nach Vergleichsbeispiel 1 hergestellt wurde betrug lediglich 0,5 °C.

**Patentansprüche**

1. Verfahren zum Vergießen von Hohlfasermembranen aufweisend die Schritte:

   (i) Bereitstellen einer Vielzahl von Hohlfasermembranen,
   (ii) Umsetzen einer Isocyanatkomponente, enthaltend zumindest eine Diisocyanatverbindung, mit hydroxygruppenhaltigen anorganischen Partikeln unter Ausbildung einer Zusammensetzung enthaltend ein isocyanatgruppenhaltiges Addukt, wobei

      die Isocyanatgruppen der Isocyanatkomponente gegenüber den Hydroxygruppen der hydroxygruppenhaltigen anorganischen Partikel im stöchiometrischen Überschuss vorgelegt werden, und wobei
      wenigstens ein Teil der Hydroxygruppen der hydroxygruppenhaltigen anorganischen Partikel mit wenigstens einem Teil der Isocyanatgruppen der Isocyanatkomponente zu Urethanbindungen umgesetzt sind,

      (iii) Vermischen der erhaltenen Zusammensetzung enthaltend das isocyanatgruppenhaltige Addukt mit einer Polyolkomponente, enthaltend zumindest eine Diol- Verbindung, zu einer Vergussmasse,
      (iv) Vergießen der Hohlfasermembranen mit der Vergussmasse in zumindest einer Vergusszone,
      (v) Aushärten der Vergussmasse in der Vergusszone zu einem Polyurethanharz.

2. Verfahren nach Anspruch 1 **dadurch gekennzeichnet, dass** die hydroxygruppenhaltigen anorganischen Partikel eine gewichtsmittlere Korngröße von 200 nm oder weniger, bevorzugt von 150 nm oder weniger, weiter bevorzugt 100 nm oder weniger weiter bevorzugt 50 nm oder weniger und mindestens 1 nm oder mehr, oder 2 nm oder mehr, oder 5 nm oder mehr aufweisen.

3. Verfahren nach Anspruch 1 oder 2, **dadurch gekennzeichnet, dass** der Anteil der hydroxygruppenhaltigen anorganischen Partikel 2,3 Gew.% oder weniger, bevorzugt 1,3 Gew.% oder weniger, weiter bevorzugt 0,75 Gew.% oder weniger, weiter bevorzugt 0,6 Gew.% oder weniger und 0,01 Gew.% oder mehr, bevorzugt 0,05 Gew.% oder mehr, weiter bevorzugt 0,1 Gew.% oder mehr, weiter bevorzugt 0,15 Gew.% oder mehr bezogen auf das Gesamtgewicht der Vergussmasse beträgt.

4. Verfahren nach wenigstens einem der Ansprüche 1 bis 3 **dadurch gekennzeichnet, dass** es sich bei den hydroxygruppenhaltigen anorganischen Partikeln um siliziumdioxid-$(SiO_2)$, titandioxid- $(TiO_2)$, zirkondioxid- $(ZrO_2)$, oder aluminiumoxidhaltige $(Al_2O_3)$ Partikel oder Mischungen von diesen Partikeln handelt.

5. Verfahren nach wenigstens einem der Ansprüche 1 bis 4, **dadurch gekennzeichnet, dass** die hydroxygruppenhaltigen anorganischen Partikel eine Hydroxygruppenzahl von $1 \times 10^{-5}$ mol/g bis $1 \times 10^{-2}$ mol/g, bevorzugt $5 \times 10^{-4}$ mol/g bis $1 \times 10^{-2}$ mol/g, bezogen auf die Masse der hydroxygruppenhaltigen anorganischen Partikel aufweisen.

6. Verfahren nach wenigstens einem der Ansprüche 1 bis 5, **dadurch gekennzeichnet, dass** die hydroxygruppenhaltigen anorganischen Partikel vor der Umsetzung mit der Isocyanatkomponente bei Temperaturen von 100°C bis 150°C bis zur Gewichtskonstanz getrocknet werden.

7. Verfahren nach wenigstens einem der Ansprüche 1 bis 6 **dadurch gekennzeichnet, dass** die Zusammensetzung ein Molverhältnis von Isocyanatgruppen der Isocyanatkomponente zu Hydroxygruppen der hydroxygruppenhaltigen anorganischen Partikel von mindestens 100 zu 1, bevorzugt mindestens 1000:1, aufweist.

8. Verfahren nach wenigstens einem der Ansprüche 1 bis 7, **dadurch gekennzeichnet, dass** ein stöchiometrisches Molverhältnis von 0,9 zu 1,1 bis 1,1 zu 0,9, bevorzugt von 0,99 zu 1,01 bis 1,01 zu 0,991:1, weiter bevorzugt ein Molverhältnis von 1 zu 1, der Hydroxygruppen der Polyolkomponente und der freien Isocyanatgruppen der Zusammensetzung enthaltend das isocyanatgruppenhaltige Addukt eingestellt wird.

9. Hohlfasermembranfilter aufweisend eine Vielzahl von Hohlfasermembranen, die in wenigstens einer Vergusszone in einem Polyurethanharz vergossen sind, **dadurch gekennzeichnet, dass** das Polyurethanharz wenigstens 0,01 Gew.% bis 2,3 Gew.% hydroxygruppenhaltige anorganische Partikel, bezogen auf das Gesamtgewicht des Polyurethanharzes, aufweist, die über Urethanbindungen in dem Polyurethanharz gebunden sind, wobei wenigstens ein Teil der Hydroxygruppen der hydroxygruppenhaltigen anorganischen Partikel mit wenigstens einem Teil der Isocyanatgruppen der Isocyanatkomponente zu Urethanbindungen umgesetzt sind.

10. Hohlfasermembranfilter nach Anspruch 9, **dadurch gekennzeichnet, dass** die durch die Urethanbindungen im Polyurethanharz gebundenen anorganischen Partikel aus siliziumdioxid- $(SiO_2)$, zirkondioxid- $(ZrO_2)$, aluminiumoxid- $(Al_2O_3)$ oder titandioxidhaltigen $(TiO_2)$ Partikeln oder Mischungen dieser Partikel bestehen.

11. Hohlfasermembranfilter nach Anspruch 9 oder 10, **dadurch gekennzeichnet, dass** die anorganischen Partikel eine gewichtsmittlere Korngröße von 200 nm oder weniger, bevorzugt von 150 nm oder weniger, weiter bevorzugt 100 nm oder weniger weiter bevorzugt 50 nm oder weniger und mindestens 1 nm oder mehr, oder 2nm oder mehr, oder 5 nm oder mehr aufweisen.

12. Hohlfasermembranfilter nach wenigstens einem der Ansprüche 9 bis 11, **dadurch gekennzeichnet, dass** das Polyurethanharz 1,3 Gew.% oder weniger, weiter bevorzugt 0,75 Gew.% oder weniger, bevorzugt 0,6 Gew.% oder weniger und 0,05 Gew.% oder mehr, bevorzugt 0,1 Gew.% oder mehr, weiter bevorzugt 0,15 Gew.% oder mehr der anorganischen Partikel, bezogen auf das Gesamtgewicht des Polyurethanharzes aufweist.

13. Hohlfasermembranfilter nach wenigstens einem der Ansprüche 9 bis 12, **dadurch gekennzeichnet, dass** das Polyurethanharz eine Glasübergangstemperatur aufweist, die um mehr als 3°C, bevorzugt mehr als 5 °C, weiter bevorzugt mehr als 7°C, oder vorzugsweise bis zu 12°C, weiter vorzugsweise bis zu 14°C erhöht ist gegenüber einem entsprechenden Polyurethanharz, welches keine urethangebundenen anorganischen Partikel aufweist, das aber aus der gleichen Isocyanatkomponente und der gleichen Polyolkomponente hergestellt ist.

14. Hohlfasermembranfilter nach Anspruch 9, **dadurch gekennzeichnet, dass** das Vergießen der Hohlfasermembranen in dem Polyurethanharz nach wenigstens einem der Ansprüche 1 bis 8 erfolgt.

15. Verwendung eines isocyanatgruppenhaltigen Addukts in einem Verfahren zum Vergießen von Hohlfasermembranen, wobei das isocyanatgruppenhaltige Addukt erhalten wird durch Umsetzen wenigstens einer Isocyanatkomponente, enthaltend zumindest eine Diisocyanatverbindung, und hydroxygruppenhaltigen anorganischen Partikeln, wobei wenigstens ein Teil der Hydroxygruppen der hydroxygruppenhaltigen anorganischen Partikel mit wenigstens einem Teil der Isocyanatgruppen der Isocyanatkomponente zu Urethanbindung umgesetzt sind, und wobei in dem erhaltenen Addukt freie Isocyanatgruppen vorhanden sind.

## Claims

1. A method for potting hollow fiber membranes comprising the steps:

    (i) providing a plurality of hollow fiber membranes,
    (ii) reacting an isocyanate component containing at least one diisocyanate compound with inorganic particles containing hydroxy groups to form a composition comprising an isocyanate group-containing adduct,
    wherein

        the isocyanate groups of the isocyanate component are present in stoichiometric excess relative to the hydroxy groups of the hydroxy group-containing inorganic particles, and
        wherein
        at least a portion of the hydroxy groups of the hydroxy group-containing inorganic particles reacts with at least a portion of the isocyanate groups of the isocyanate component into urethane bonds,

    (iii) mixing the obtained compound containing the isocyanate group-containing adduct with a polyol component containing at least one diol compound into a potting mass,
    (iv) potting the hollow fiber membranes with the potting mass in at least one potting zone,
    (v) hardening the potting mass in the potting zone into a polyurethane resin.

2. The method according to claim 1, **characterized in that** the hydroxy group-containing inorganic particles have a weight-average particle size of 200 nm or less, preferentially 150 nm or less, further preferentially 100 nm or less, further preferentially 50 nm or less, and at least 1 nm or greater, or 2 nm or greater, or 5 nm or greater.

3. The method according to claim 1 or 2, **characterized in that** the percentage of the hydroxy group-containing inorganic particles amount to 2.3% by weight or less, preferentially 1.3 wt% or less, further preferentially 0.75 wt% or less, further preferentially 0.6 wt% or less, and 0.01 wt% or more, preferentially 0.05 wt% or more, further preferentially 0.1 wt% or more, further preferentially 0.15 wt% or more in relation to the total weight of the potting compound.

4. The method according to at least one of claims 1 to 3, **characterized in that** the hydroxy group-containing inorganic particles are particles containing silicon dioxide ($SiO_2$), titanium dioxide ($TiO_2$), zirconium dioxide ($ZrO_2$) or aluminum oxide ($Al_2O_3$) or mixtures of said particles,

5. The method according to at least one of claims 1 to 4, **characterized in that** the hydroxy group-containing inorganic particles have a hydroxy group number of $1\times10^{-5}$ mol/g to $1\times10^{-2}$ mol/g, preferentially $5\times10^{-4}$ mol/g to $1\times10^{-2}$ mol/g, relative to the mass of the hydroxy group-containing inorganic particles.

6. The method according to at least one of claims 1 to 5, **characterized in that** the hydroxy group-containing inorganic particles are dried to constant weight at temperatures of from 100°C to 150°C prior to the reaction with the isocyanate component.

7. The method according to at least one of claims 1 to 6, **characterized in that** the composition has a molar ratio of isocyanate component isocyanate groups to hydroxy groups of the hydroxy group-containing inorganic particles of at least 100 to 1, preferentially at least 1000:1.

8. The method according to at least one of claims 1 to 7, **characterized in that** a stoichiometric molar ratio of from 0.9 : 1.1 to 1.1 : 0.9, preferentially from 0.99 : 1.01 to 1.01 : 0.99, further preferentially a molar ratio of 1 : 1, is set for the hydroxy groups of the polyol component and the free isocyanate groups of the composition containing the isocyanate group-containing adduct.

9. A hollow fiber membrane filter comprising a plurality of hollow fiber membranes potted in a polyurethane resin in at least one potting zone **characterized in that** the polyurethane resin comprises at least 0.01% to 2.3% by weight of inorganic particles containing hydroxy groups bonded in the polyurethane resin via urethane bonds relative to the total weight of the polyurethane resin,
wherein
at least a part of the inorganic particles containing hydroxy groups are reacted with at least a part of the isocyanate groups of the isocyanate component.

10. The hollow fiber membrane filter according to claim 9, **characterized in that** the inorganic particles bound in the polyurethane resin by the urethane bonds are particles of silicon dioxide ($SiO_2$), zirconium dioxide ($ZrO_2$), aluminum oxide ($Al_2O_3$) or titanium dioxide ($TiO_2$) or mixtures of said particles,

11. The hollow fiber membrane filter according to claim 9 or 10, **characterized in that** the inorganic particles have a weight-average particle size of 200 nm or less, preferentially 150 nm or less, further preferentially 100 nm or less, further preferentially 50 nm or less, and at least 1 nm or greater, or 2 nm or greater, or 5 nm or greater.

12. The hollow fiber membrane filter according to at least one of claims 9 to 11, **characterized in that** the polyurethane resin amounts to 1.3% by weight or less, further preferentially 0.75 wt% or less, preferentially 0.6 wt% or less, and 0.05 wt% or more, preferentially 0.1 wt% or more, further preferentially 0.15 wt% or more of the inorganic particles relative to the total weight of the polyurethane resin.

13. The hollow fiber membrane filter according to at least one of claims 9 to 12, **characterized in that** the polyurethane resin has a glass transition temperature which is higher than 3°C, preferentially higher than 5°C, further preferentially higher than 7°C, or preferentially up to 12°C, further preferentially up to 14°C higher than an equivalent polyurethane resin not comprising any urethane-bound inorganic particles but yet produced from the same isocyanate component and the same polyol component.

14. The hollow fiber membrane filter according to claim 9, **characterized in that** the hollow fiber membranes are potted in the polyurethane resin in accordance with at least one of claims 1 to 8.

15. Use of an isocyanate group-containing adduct in a process of potting hollow fiber membranes, wherein
the isocyanate group-containing adduct is obtained by reacting at least one isocyanate component containing at least one diisocyanate compound and inorganic particles containing hydroxy groups, wherein at least one part of the hydroxy groups of the inorganic particles containing hydroxy groups are reacted with at least one part of the isocyanate groups of the isocyanate component into a urethane bond, and wherein free isocyanate groups are present in the obtained adduct.

## Revendications

1. Procédé d'enrobage de membranes en fibres creuses, comprenant les étapes consistant à :

   (i) mettre à disposition une pluralité de membranes en fibres creuses,
   (ii) faire réagir un composant isocyanate, contenant au moins un composé diisocyanate, avec des particules inorganiques contenant des groupes hydroxy pour former une composition contenant un produit d'addition contenant des groupes isocyanate,
   dans lequel

les groupes isocyanate du composant isocyanate sont fournis en excédent stœchiométrique par rapport aux groupes hydroxy des particules inorganiques contenant des groupes hydroxy, et
dans lequel
au moins une partie des groupes hydroxy des particules inorganiques contenant des groupes hydroxy est mise à réagir avec au moins une partie des groupes isocyanate du composant isocyanate en liaisons uréthane,

   (iii) mélanger la composition obtenue contenant le produit d'addition contenant des groupes isocyanate avec un composant polyol, contenant au moins un composé diol, pour former une masse d'enrobage,
   (iv) enrober les membranes en fibres creuses avec la masse d'enrobage dans au moins une zone d'enrobage,
   (v) faire durcir la masse d'enrobage dans la zone d'enrobage pour former une résine de polyuréthane.

2. Procédé selon la revendication 1, **caractérisé en ce que** les particules inorganiques contenant des groupes hydroxy présentent une taille de grain moyenne en poids de 200 nm ou moins, préférentiellement de 150 nm ou moins, plus préférentiellement de 100 nm ou moins, encore plus préférentiellement de 50 nm ou moins et d'au moins 1 nm ou plus, ou de 2 nm ou plus, ou de 5 nm ou plus.

3. Procédé selon la revendication 1 ou 2, **caractérisé en ce que** la proportion des particules inorganiques contenant des groupes hydroxy est de 2,3 % en poids ou moins, préférentiellement de 1,3 % en poids ou moins, plus préférentiellement de 0,75 % en poids ou moins, encore plus préférentiellement de 0,6 % en poids ou moins et de 0,01 % en poids ou plus, préférentiellement de 0,05 % en poids ou plus, plus préférentiellement de 0,1 % en poids ou plus, encore plus préférentiellement de 0,15 % en poids ou plus par rapport au poids total de la masse d'enrobage.

4. Procédé selon au moins l'une des revendications 1 à 3, **caractérisé en ce que** les particules inorganiques contenant des groupes hydroxy sont des particules contenant du dioxyde de silicium ($SiO_2$), du dioxyde de titane ($TiO_2$), du dioxyde de zircon ($ZrO_2$) ou de l'oxyde d'aluminium ($Al_2O_3$) ou des mélanges de ces particules.

5. Procédé selon au moins l'une des revendications 1 à 4, **caractérisé en ce que** les particules inorganiques contenant des groupes hydroxy présentent un nombre de groupes hydroxy de $1 \times 10^{-5}$ mol/g à 1

× 10$^{-2}$ mol/g, de préférence 5 × 10$^{-4}$ mol/g à 1 × 10$^{-2}$ mol/g, par rapport à la masse de particules inorganiques contenant des groupes hydroxy.

6. Procédé selon au moins l'une des revendications 1 à 5, **caractérisé en ce que** les particules inorganiques contenant des groupes hydroxy sont séchées avant la conversion avec le composant isocyanate à des températures de 100 °C à 150 °C jusqu'à constance du poids.

7. Procédé selon au moins l'une des revendications 1 à 6, **caractérisé en ce que** la composition présente un rapport molaire des groupes isocyanate du composant isocyanate sur les groupes hydroxy des particules inorganiques contenant des groupes hydroxy d'au moins 100 sur 1, de préférence d'au moins 1000/1.

8. Procédé selon au moins l'une des revendications 1 à 7, **caractérisé en ce qu'**un rapport molaire stœchiométrique de 0,9 sur 1,1 à 1,1 sur 0,9, préférentiellement de 0,99 sur 1,01 à 1,01 sur 0,991/1, et plus préférentiellement un rapport molaire de 1 sur 1, des groupes hydroxy du composant polyol et des groupes isocyanate libres de la composition contenant le produit d'addition contenant des groupes isocyanate est ajusté.

9. Filtre à membranes en fibres creuses comportant une pluralité de membranes en fibres creuses qui sont enrobées dans au moins une zone d'enrobage dans une résine de polyuréthane, **caractérisé en ce que** la résine de polyuréthane présente au moins 0,01 % en poids à 2,3 % en poids de particules inorganiques contenant des groupes hydroxy, par rapport au poids total de la résine de polyuréthane, qui sont liées par le biais de liaisons uréthane dans la résine de polyuréthane, dans lequel
au moins une partie des groupes hydroxy des particules inorganiques contenant des groupes hydroxy est mise à réagir avec au moins une partie des groupes isocyanate du composant isocyanate en liaisons uréthane.

10. Filtre à membranes en fibres creuses selon la revendication 9, **caractérisé en ce que** les particules inorganiques liées par les liaisons uréthane dans la résine de polyuréthane se composent de particules contenant du dioxyde de silicium (SiO$_2$), du dioxyde de zircon (ZrO$_2$), de l'oxyde d'aluminium (Al$_2$O$_3$) ou du dioxyde de titane (TiO$_2$), ou de mélanges de ces particules.

11. Filtre à membranes en fibres creuses selon la revendication 9 ou 10, **caractérisé en ce que** les particules inorganiques présentent une taille de grain moyenne en poids de 200 nm ou moins, de préférence de 150 nm ou moins, de manière mieux préférée de 100 nm ou moins, de manière encore mieux préférée de 50 nm ou moins et d'au moins 1 nm ou plus, ou de 2 nm ou plus, ou de 5 nm ou plus.

12. Filtre à membranes en fibres creuses selon au moins l'une des revendications 9 à 11, **caractérisé en ce que** la résine de polyuréthane présente 1,3 % en poids ou moins, de manière mieux préférée 0,75 % en poids ou moins, de préférence 0,6 % en poids ou moins et 0,05 % en poids ou plus, de préférence 0,1 % en poids ou plus, de manière mieux préférée 0,15 % en poids ou plus de particules inorganiques, par rapport au poids total de la résine de polyuréthane.

13. Filtre à membranes en fibres creuses selon au moins l'une des revendications 9 à 12, **caractérisé en ce que** la résine de polyuréthane présente une température de transition vitreuse, qui est augmentée de plus de 3 °C, de préférence de plus de 5 °C, de manière mieux préférée de plus de 7 °C, ou de préférence jusqu'à 12 °C, de manière encore mieux préférée jusqu'à 14 °C par rapport à une résine de polyuréthane correspondante qui ne présente pas de particules inorganiques à liaisons uréthane, qui est cependant fabriquée à partir du même composant isocyanate et du même composant polyol.

14. Filtre à membranes en fibres creuses selon la revendication 9, **caractérisé en ce que** l'enrobage des membranes en fibres creuses dans la résine de polyuréthane s'effectue au moins selon l'une des revendications 1 à 8.

15. Utilisation d'un produit d'addition contenant des groupes isocyanate dans un procédé d'enrobage de membranes en fibres creuses, dans laquelle le produit d'addition contenant des groupes isocyanate est obtenu par conversion d'au moins un composant isocyanate, contenant au moins un composé diisocyanate, et de particules inorganiques contenant des groupes hydroxy, où au moins une partie des groupes hydroxy des particules inorganiques contenant des groupes hydroxy est mise à réagir avec au moins une partie des groupes isocyanate du composant isocyanate en liaison uréthane, et où des groupes isocyanate libres sont présents dans le produit d'addition obtenu.

# <u>FIGUREN</u>

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2024067 A1
- EP 1992399 A1
- EP 2644662 A1
- US 4359359 A
- US 20140217023 A
- EP 2236532 A1
- EP 2017081955 W

**In der Beschreibung aufgeführte Nicht-Patentliteratur**

- Preparation of hydrophobic Silica with Isocyanates. **JUN YATABE et al.** Journal of the ceramic society of Japan, International Edition. Fuji Technology Press, 01. Juni 1994, vol. 102, 595-598
- Functionalized TiO nanoparticle containing isocyanate groups. **BAOLI OU et al.** Materials chemistry and physics. Elsevier SA, 13. Juni 2012, vol. 135, 1104-1107